# EUROPEAN PATENT APPLICATION

(11) **EP 4 827 103 A1**
(43) Date of publication of application: **21.10.2026**
(21) Application number: 24907800.7
(22) Date of filing: 13.11.2024
(51) Int. Cl.: H04N 23/68, H04N 23/54, H04N 23/55, H04N 23/65, H04N 23/67, H04N 23/69, G03B 3/10, G03B 13/36, G03B 5/06

(54) **CAMERA MODULE AND OPERATION METHOD THEREOF**

(30) Priority: 20.12.2023 KR 20230186763; 29.03.2024 KR 20240043327
(71) Applicant: Samsung Electronics Co., Ltd., Suwon-si, Gyeonggi-do 16677 (KR)
(72) Inventor: KIM, Sungmin, Suwon-si Gyeonggi-do 16677 (KR); KIM, Haneung, Suwon-si Gyeonggi-do 16677 (KR); HWANG, Youngjae, Suwon-si Gyeonggi-do 16677 (KR); SHIM, Jaekyu, Suwon-si Gyeonggi-do 16677 (KR)
(74) Representative: Gulde & Partner
(86) International application number: PCT/KR2024/017892
(87) International publication number: WO 2025/135515

(57) **Abstract**

In this operation method of a camera module, the camera module comprises: an image sensor; a first lens assembly; and a first driving circuit including a first coil and a first magnet, wherein the first driving circuit is configured to move the first lens assembly in at least one axial direction. The operation method of a camera module may comprise the operations of: applying a driving voltage to the first driving circuit according to a linear driving method on the basis of a first value being greater than a specified value, the first value being related to a first maximum current value flowing through the first coil and noise of the image sensor on the basis of a first distance between the first coil and the image sensor; and applying the driving voltage to the first driving circuit according to a PWM method on the basis of the first value not being greater than the specified value. Various other embodiments are possible.

## Description

### Technical Field

Embodiments of the disclosure relate to a camera module and a method of operating the same.

### Background Art

With the development of digital camera manufacturing technology, an electronic device equipped with a compact and lightweight camera has been used. With a camera mounted in an electronic device, a user may conveniently utilize various functions such as taking photos or recording videos, as well as video calls or augmented reality.

A camera may perform an image stabilization function for image correction in response to disturbance. Here, the disturbance may be the occurrence of various artifacts, such as blurring of the image obtained through the camera module due to slight shaking of the user's hand when taking a photo or video. The image stabilization function, e.g., a shake (or hand shake) correction function, may move the lens assembly included in the camera module on a plane perpendicular to the optical axis to compensate for limited movement of the electronic device due to the user's grip or the fixing device, thereby preventing or alleviating shakes in the captured image or video. To this end, a camera may include a coil and a magnet. A coil to which current is applied may generate electromagnetic force through electromagnetic interaction with a magnet, and the camera may perform a shake correction function using the generated electromagnetic force. Various methods may be applied as a method of correcting shake using electromagnetic force, such as lens shift for moving a lens assembly, prism shift for moving a prism, and module tilt for tilting a camera.

The above-described information may be provided as background for the purpose of helping understanding of the disclosure. No claim or determination is made as to whether any of the foregoing is applicable as background art in relation to the disclosure.

### Detailed Description of the Invention

### Technical Solution

According to an embodiment, in a method of operating a camera module, the camera module may include an image sensor, a first lens assembly, and first driving circuitry including a first coil and a first magnet, and the first driving circuitry may be configured to move the first lens assembly in at least one axial direction.

According to an embodiment, the method of operating the camera module may include an operation of applying a driving voltage to the first driving circuitry according to a linear driving scheme based on a first value related to noise of the image sensor based on a first maximum current value flowing in the first coil and a first distance between the first coil and the image sensor being greater than a specified value.

According to an embodiment, the method of operating the camera module may include an operation of applying the driving voltage to the first driving circuitry according to a pulse width modulation (PWM) scheme based on the first value being no greater than the specified value.

According to an embodiment, a camera module may include an image sensor, a first lens assembly, a control circuit, and at least one driving circuitry, and the at least one driving circuitry may be configured to move the first lens assembly in at least one axial direction.

According to an embodiment, in the camera module, the control circuit may apply a driving voltage to the at least one driving circuitry according to a pulse width modulation (PWM) scheme.

According to an embodiment, in the camera module, a value related to noise of the image sensor based on a maximum current value flowing in each coil included in the at least one driving circuitry and a distance between each coil and the image sensor may be equal to or less than a specified value.

According to an embodiment, a camera module may include an image sensor, a first lens assembly, a control circuit, and a plurality of driving circuitries including first driving circuitry including a first magnet and a first coil and second driving circuitry including a second magnet and a second coil, and at least a portion of the plurality of driving circuitries may be configured to move the first lens assembly in at least one axial direction.

According to an embodiment, in the camera module, the control circuit may apply a driving voltage to the first driving circuitry according to a pulse width modulation (PWM) scheme and apply the driving voltage to the second driving circuitry according to a linear scheme.

According to an embodiment, in the camera module, a first value related to noise of the image sensor based on a first maximum current value flowing in the first coil and a first distance between the first coil and the image sensor may be less than a second value related to noise of the image sensor based on a second maximum current value flowing in the second coil and a second distance between the second coil and the image sensor.

### Brief Description of Drawings

FIG. 1 is a view illustrating an electronic device in a network environment according to an embodiment.
FIG. 2 is a block diagram illustrating a camera module according to an embodiment.
FIG. 3A is a view illustrating driving circuitry of a camera module according to an embodiment.
FIG. 3B is a view illustrating driving circuitry of a camera module according to an embodiment.
FIG. 4 is a schematic block diagram illustrating a camera module according to an embodiment.
FIG. 5 is a block diagram schematically illustrating an electronic device according to an embodiment.
FIG. 6 is a graph for describing a maximum value of current flowing in a coil according to an embodiment.
FIG. 7A is a flowchart illustrating an operation in which an electronic device sets a driving scheme of at least one driving circuitry according to an embodiment.
FIG. 7B is a flowchart illustrating an operation in which an electronic device sets a driving scheme of at least one driving circuitry according to an embodiment.
FIG. 8 is a flowchart illustrating an operation in which an electronic device drives at least one driving circuitry according to a preset driving scheme according to an embodiment.
FIG. 9 is a flowchart illustrating an operation in which an electronic device determines a specified value related to noise of an image sensor according to an embodiment.
FIG. 10 is a view schematically illustrating a structure of a camera module according to an embodiment.
FIG. 11 is a view illustrating a distance between a camera module and an image sensor according to an embodiment.
FIG. 12A is a view schematically illustrating a structure of a camera module according to an embodiment.
FIG. 12B is a view illustrating a distance between a camera module and an image sensor according to an embodiment.
FIG. 13 is a view schematically illustrating a structure of a camera module according to an embodiment.
FIG. 14 is a view illustrating magnetic flux for describing a relationship between a magnetic field generated by a coil and noise of an image sensor based on a distance between the coil included in driving circuitry and the image sensor according to an embodiment.
FIG. 15 is a view illustrating magnetic flux for describing a relationship between a magnetic field generated by a coil and noise of an image sensor based on a distance between the coil included in driving circuitry and the image sensor according to an embodiment.
FIG. 16 is a flowchart illustrating an operation in which an electronic device determines a driving scheme of first driving circuitry, a driving scheme of second driving circuitry, and a driving scheme of third driving circuitry according to an embodiment.

### Mode for Carrying out the Invention

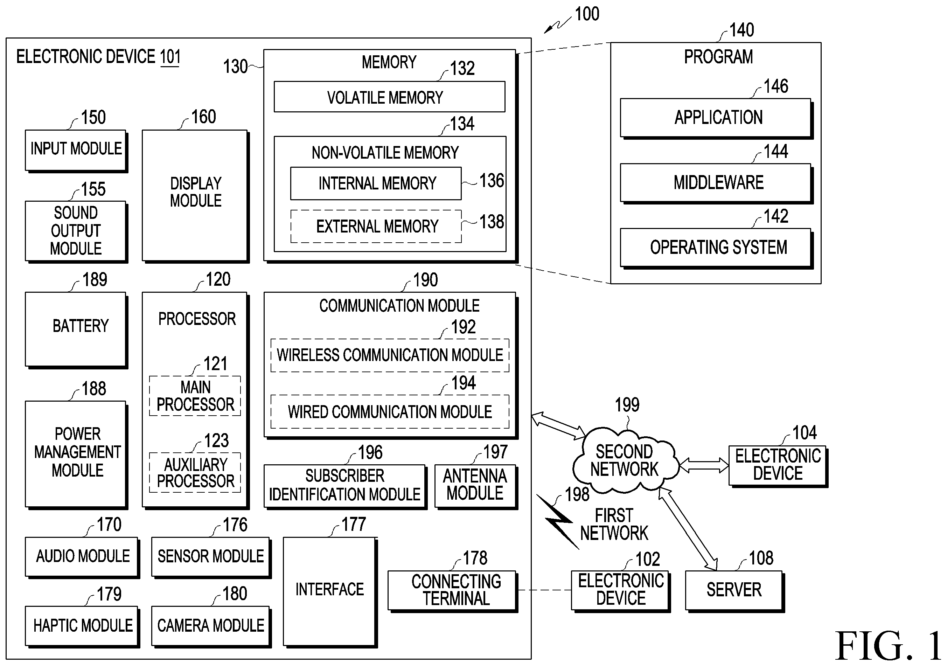

FIG. 1 is a block diagram illustrating an electronic device 101 in a network environment 100, according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

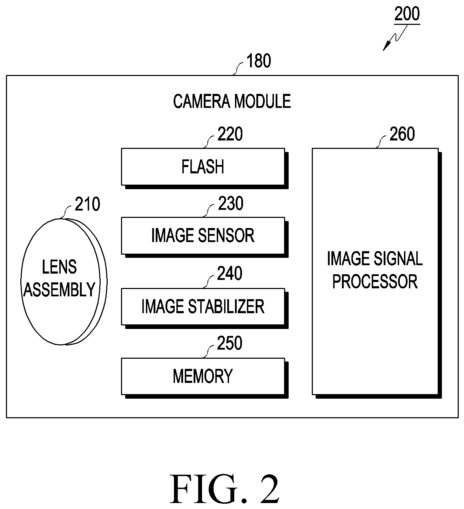

FIG. 2 is a block diagram 200 illustrating a camera module 180 according to an embodiment.

Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In this case, the camera module 180 may form, e.g., a dual-camera, a 360-degree camera, or a spherical camera. Some of the plurality of lens assemblies 210 may have the same lens attribute (e.g., field of view, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, e.g., a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This makes it possible to compensate for at least some of the negative effects of the movement on the image being taken. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules180 may form a rear camera.

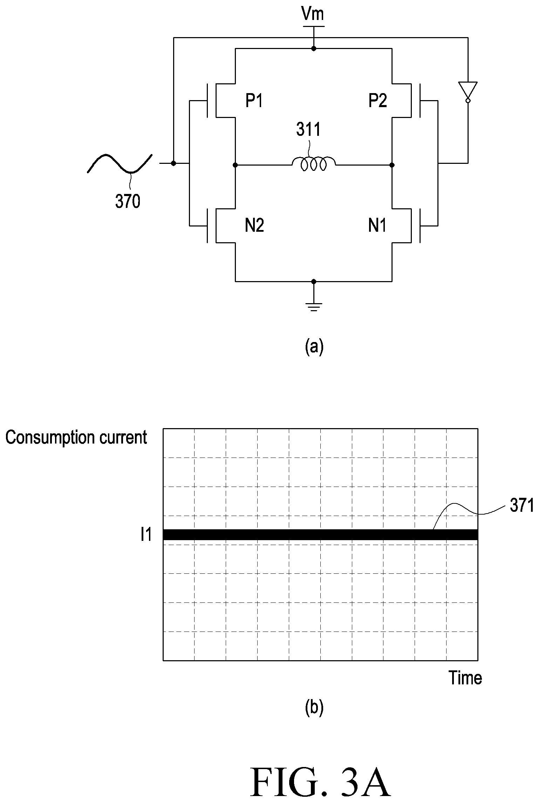

FIG. 3A is a view illustrating driving circuitry of a camera module according to an embodiment.

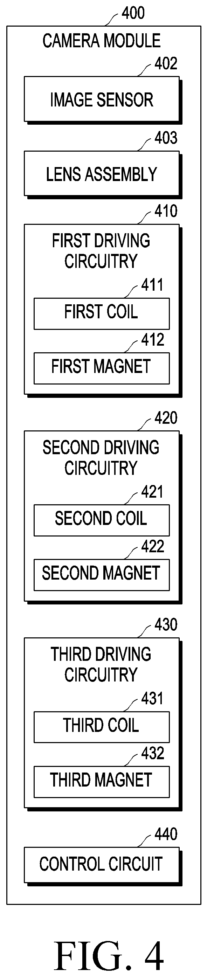

Referring to (a) of FIG. 3A, according to an embodiment, a camera module 400 (e.g., the camera module 400 of FIG. 4) may include driving circuitry. For example, the driving circuitry may include driving circuitry configured to move a lens assembly 403 (e.g., the lens assembly 403 of FIG. 4) in a first axial direction so that the camera module 400 performs an auto focus (AF) function. For example, the driving circuitry may include driving circuitry configured to move the lens assembly 403 or a reflective member in a second axial direction perpendicular to the first axial direction or a third axial direction perpendicular to the first axial direction and the second axial direction so that the camera module 400 performs an optical image stabilization (OIS) function.

According to an embodiment, the driving circuitry may include a first p-channel metal oxide semiconductor (PMOS) transistor P1, a second PMOS transistor P2, a first n-channel metal oxide semiconductor (NMOS) transistor N1, and a second NMOS transistor N2. According to an embodiment, the first PMOS transistor P1, the second PMOS transistor P2, the first NMOS transistor N1, and the second NMOS transistor N2 may be implemented as field effect transistor (FET) elements or bipolar junction transistor (BJT) elements. According to an embodiment, the driving circuitry may include a coil 311 and a magnet (not illustrated).

According to an embodiment, the first PMOS transistor P1, the second PMOS transistor P2, the first NMOS transistor N1, and the second NMOS transistor N2 may be elements for adjusting a direction of current applied to the coil 311.

According to an embodiment, the first PMOS transistor P1, the second PMOS transistor P2, the first NMOS transistor N1, and the second NMOS transistor N2 may form an H bridge.

According to an embodiment, the first PMOS transistor P1 may be disposed between a driving power source Vm and one end of the coil 311. According to an embodiment, the second NMOS transistor N2 may be disposed between the one end of the coil 311 and a ground. According to an embodiment, the second PMOS transistor P2 may be disposed between the driving power source Vm and the other end of the coil 311. According to an embodiment, the first NMOS transistor N1 may be disposed between the other end of the coil 311 and the ground.

According to an embodiment, the camera module 400 may apply a driving voltage 370 to the driving circuitry in a linear scheme. For example, the linear scheme may include a scheme in which the camera module 400 adjusts an amplitude of a voltage 370 output by the driving power source Vm and applies a driving voltage to the driving circuitry. According to an embodiment, as a magnitude of the voltage 370 output by the driving power source is greater, current flowing in the coil 311 may be relatively greater. According to an embodiment, as the magnitude of the voltage 370 output by the driving power source is smaller, current flowing in the coil 311 may be relatively smaller.

Referring to (b) of FIG. 3A, according to an embodiment, as a driving voltage is applied to the driving circuitry, current may flow in the coil 311. According to an embodiment, based on electromagnetic force generated through electromagnetic interaction between the magnet and the coil 311, the magnet may move.

According to an embodiment, when the driving circuitry is driven in a linear scheme, a value of current consumed by the driving circuitry may represent an I1 value 371. According to an embodiment, when the driving voltage 370 is applied to the driving circuitry in a linear scheme, an influence of a magnetic field generated by electromagnetic force of the coil 311 and the magnet may not reach the image sensor.

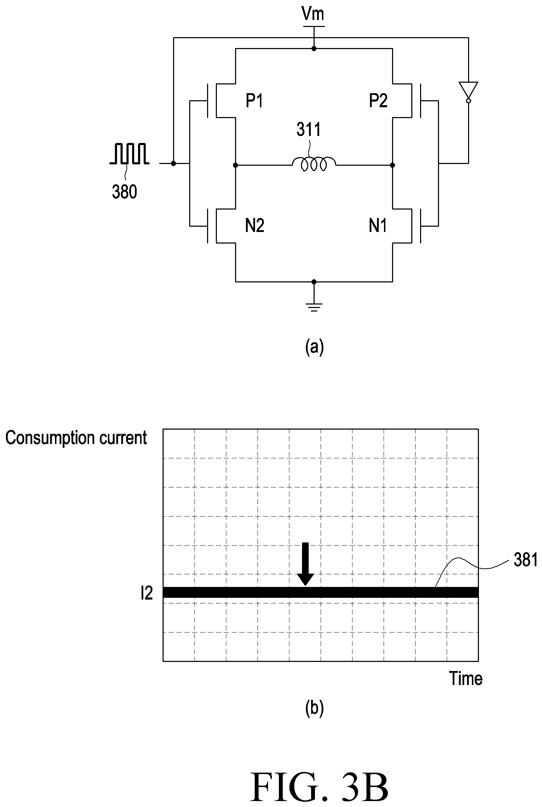

FIG. 3B is a view illustrating driving circuitry of a camera module according to an embodiment.

Referring to (a) of FIG. 3B, according to an embodiment, a camera module 400 (e.g., the camera module 400 of FIG. 4) may apply a driving voltage 380 to the driving circuitry in a pulse width modulation (PWM) scheme.

According to an embodiment, the PWM scheme may include a scheme in which the camera module 400 adjusts a duty ratio for turning on and off a driving power source Vm and applies a driving voltage 380 output from the driving power source Vm to the driving circuitry. For example, the driving voltage 380 may include a pulse wave.

Referring to (b) of FIG. 3B, according to an embodiment, when the driving circuitry is driven in a PWM scheme, a value of current consumed by the driving circuitry may represent an I2 value 381. The I2 value 381 may represent a value smaller than the I1 value 371 (e.g., the I1 value 371 of FIG. 3A).

According to an embodiment, power consumed by the driving circuitry when the driving circuitry is driven in a linear scheme may be greater than power consumed by the driving circuitry when the driving circuitry is driven in a PWM scheme.

According to an embodiment, based on a distance between the coil 311 and an image sensor and a maximum current value flowing in the coil 311, the camera module 400 may determine whether a magnetic field generated by electromagnetic force of the coil 311 and the magnet affects the image sensor when the driving circuitry is driven in a PWM scheme. According to an embodiment, based on determining whether the magnetic field generated by electromagnetic force of the coil 311 and the magnet affects the image sensor when the driving circuitry is driven in a PWM scheme, the camera module 400 may determine a driving scheme of the driving circuitry as either a linear scheme or a PWM scheme.

According to an embodiment, based on a value obtained by dividing the maximum current value flowing in the coil 311 by a square of the distance between the image sensor and the coil 311, the camera module 400 may determine whether the magnetic field generated by electromagnetic force of the coil 311 and the magnet affects the image sensor when the driving circuitry is driven in a PWM scheme. For example, as the maximum current value is smaller and as the distance between the image sensor and the coil 311 is greater, a degree to which the magnetic field affects the image sensor may be smaller.

According to an embodiment, when it is identified that the magnetic field generated by electromagnetic force of the coil 311 and the magnet does not affect the image sensor when the driving circuitry is driven in a PWM scheme, the camera module 400 may determine the driving scheme of the driving circuitry as a PWM scheme. Accordingly, according to an embodiment, the camera module 400 may relatively reduce power consumed by the driving circuitry.

According to an embodiment, when it is identified that the magnetic field generated by electromagnetic force of the coil 311 and the magnet affects the image sensor when the driving circuitry is driven in a PWM scheme, the camera module 400 may determine the driving scheme of the driving circuitry as a linear scheme so as not to generate noise of the image sensor.

Hereinafter, for convenience of description, the driving circuitry is described as including a magnet and a coil.

FIG. 4 is a schematic block diagram illustrating a camera module according to an embodiment.

Referring to FIG. 4, according to an embodiment, a camera module 400 (e.g., the camera module 180 of FIG. 2) may include an image sensor 402 (e.g., the image sensor 230 of FIG. 2), a lens assembly 403 (e.g., the lens assembly 210 of FIG. 2), a plurality of driving circuitries, and a control circuit 440.

According to an embodiment, the control circuit 440 may control the overall operation of the camera module 400.

According to an embodiment, the plurality of driving circuitries may include first driving circuitry 410 and second driving circuitry 420. According to an embodiment, the number of driving circuitries may not be limited thereto.

According to an embodiment, the first driving circuitry 410 may include driving circuitry configured to move (or rotate) the lens assembly 403 or an image sensor 230 so that the camera module 400 performs an auto focus (AF) function.

According to an embodiment, the second driving circuitry 420 may include driving circuitry configured to move (or rotate) the lens assembly 403 or the image sensor 230 so that the camera module 400 performs an optical image stabilization (OIS) function. Alternatively, the second driving circuitry 420 may include driving circuitry configured to move (or rotate) a reflective member so that the camera module 400 performs an optical image stabilization (OIS) function.

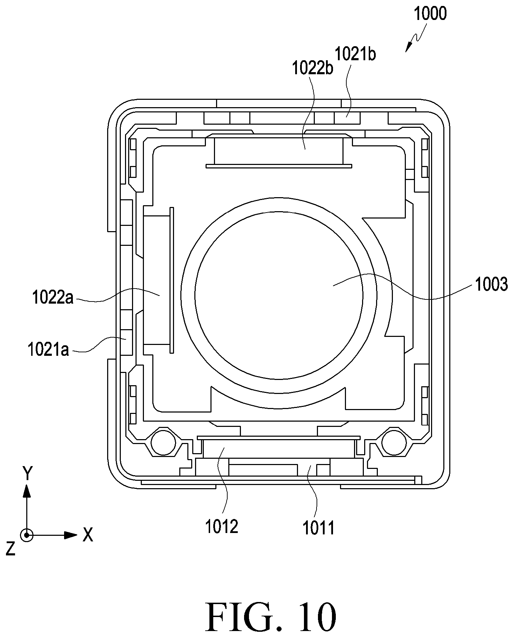

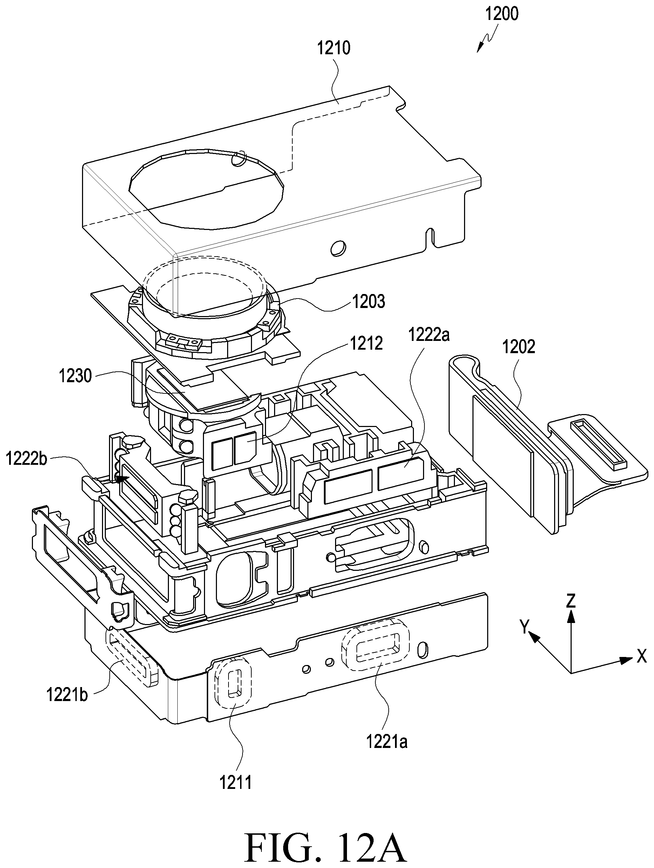

According to an embodiment, the first driving circuitry 410 may include a first coil 411 and a first magnet 412. According to an embodiment, the first magnet 412 may include at least one magnet each moving in at least one axial direction. The at least one magnet may include at least one of a first-axis magnet moving in a first axial direction (e.g., a Z-axis direction), a second-axis magnet moving in a second axial direction (e.g., an X-axis direction), or a third-axis magnet moving in a third axial direction (e.g., a Y-axis direction). According to an embodiment, the first coil 411 may include at least one coil disposed to face at least one magnet each moving in at least one axial direction. The at least one coil may include at least one of a first-axis coil disposed to face the first-axis magnet, a second-axis coil disposed to face the second-axis magnet, or a third-axis coil disposed to face the third-axis magnet. According to an embodiment, when a driving voltage is applied to the first driving circuitry 410, the first magnet 412 may move in at least one axial direction (e.g., the Z-axis of FIG. 10, the X-axis of FIG. 12A), and the first coil 411 may be disposed at a fixed position.

According to an embodiment, the second driving circuitry 420 may include a second coil 421 and a second magnet 422. According to an embodiment, the second magnet 422 may include at least one magnet each moving in at least one axial direction. The at least one magnet may include at least one of a first-axis magnet moving in a first axial direction, a second-axis magnet moving in a second axial direction, or a third-axis magnet moving in a third axial direction. According to an embodiment, the second coil 421 may include at least one coil disposed to face at least one magnet each moving in at least one axial direction. The at least one coil may include at least one of a first-axis coil disposed to face the first-axis magnet, a second-axis coil disposed to face the second-axis magnet, or a third-axis coil disposed to face the third-axis magnet. According to an embodiment, when a driving voltage is applied to the second driving circuitry 420, the second magnet 422 may move in a first axial direction (e.g., the Z-axis of FIG. 12A), a second axial direction (e.g., the X-axis of FIG. 10), or a third axial direction (e.g., the Y-axis of FIG. 10, the Y-axis of FIG. 12A), and the second coil 421 may be disposed at a fixed position. For example, when the camera module 400 is implemented as a straight-type camera (e.g., the camera module 1000 of FIG. 10), the second magnet 422 may move in a third axial direction (e.g., the Y-axis of FIG. 10), and perform an OIS function of the camera module 400 for compensating for a position in response to the camera module 400 moving in the third axial direction. Alternatively, when the camera module 400 is implemented as a straight-type camera (e.g., the camera module 1000 of FIG. 10), the second magnet 422 may move in a second axial direction (e.g., the X-axis of FIG. 10), and perform an OIS function of the camera module 400 for compensating for a position in response to the camera module 400 moving in the second axial direction.

For example, when the camera module 400 is implemented as a folded camera (e.g., the camera module 1200 of FIG. 12A), based on the second magnet 422 moving in a first axial direction (e.g., the Z-axis of FIG. 12A), the camera module 400 may perform an OIS function for compensating for a position in response to the camera module 1200 moving in a third axial direction (e.g., the Y-axis). For example, when the camera module 400 is implemented as a folded camera (e.g., the camera module 1200 of FIG. 12A), based on the second magnet 422 moving in a third axial direction (e.g., the Y-axis of FIG. 12A), the camera module 400 may perform an OIS function for compensating for a position in response to the camera module 1200 moving in a second axial direction (e.g., the X-axis). For example, the first axial direction may include an optical-axis direction. For example, the second axial direction and the third axial direction may include a direction perpendicular to the optical-axis direction.

According to an embodiment, the camera module 400 may be implemented as a straight-type camera in which light incident on the lens assembly 403 is transmitted to the image sensor 402 without being refracted.

According to an embodiment, the first driving circuitry 410 may include driving circuitry configured to move the lens assembly 403 in a first axial direction (e.g., the Z-axis of FIG. 10) so that the camera module 400 performs an auto focus (AF) function.

According to an embodiment, the second driving circuitry 420 may include second-axial-direction driving circuitry configured to move the lens assembly 403 in a second axial direction (e.g., the X-axis of FIG. 10) perpendicular to the first axial direction and/or third-axial-direction driving circuitry configured to move the lens assembly 403 in a third axial direction (e.g., the Y-axis of FIG. 10) so that the camera module 400 performs an optical image stabilization (OIS) function.

According to an embodiment, the control circuit 440 may apply a driving voltage to the first driving circuitry 410 using a PWM scheme or a linear scheme. According to an embodiment, based on electromagnetic force generated through electromagnetic interaction between the first coil 411 and the first magnet 412, the first magnet 412 may move. According to an embodiment, based on the first magnet 412 moving, the lens assembly 403 may move in a first axial direction.

According to an embodiment, a linear scheme may include a scheme in which the control circuit 440 adjusts an amplitude of a voltage output by a driving power source and applies a driving voltage to the driving circuitry. According to an embodiment, a PWM scheme may include a scheme in which the control circuit 440 adjusts a duty ratio for turning on and off a driving power source and applies a driving voltage output from the driving power source to the driving circuitry.

According to an embodiment, the control circuit 440 may apply a driving voltage to the second driving circuitry 420 using a PWM scheme or a linear scheme. According to an embodiment, based on electromagnetic force generated through electromagnetic interaction between the second coil 421 and the second magnet 422, the second magnet 422 may move. According to an embodiment, based on the second magnet 422 moving, the lens assembly 403 may move in a second axial direction or a third axial direction.

For example, the control circuit 440 may apply a driving voltage to the second-axial-direction driving circuitry using a PWM scheme or a linear scheme. For example, based on electromagnetic force generated through electromagnetic interaction between a second-axis magnet (e.g., 1022a of FIG. 10) and a second-axis coil (e.g., 1021a of FIG. 10), the second-axis magnet may move in a second axial direction. As the second-axis magnet moves in the second axial direction, the lens assembly 403 may move in the second axial direction.

For example, the control circuit 440 may apply a driving voltage to the third-axial-direction driving circuitry using a PWM scheme or a linear scheme. For example, based on electromagnetic force generated through electromagnetic interaction between a third-axis magnet (e.g., 1022b of FIG. 10) and a third-axis coil (e.g., 1021b of FIG. 10), the third-axis magnet may move in a third axial direction. As the third-axis magnet moves in the third axial direction, the lens assembly 403 may move in the third axial direction.

According to an embodiment, when a driving voltage is applied to the first driving circuitry 410, the first coil 411 may be disposed at a fixed position. According to an embodiment, when a driving voltage is applied to the second-axial-direction driving circuitry, the second-axis coil may be disposed at a fixed position. According to an embodiment, when a driving voltage is applied to the third-axial-direction driving circuitry, the third-axis coil may be disposed at a fixed position.

According to an embodiment, the camera module 400 may be implemented as a folded camera in which light reflected or refracted through a reflective member is transmitted to the image sensor 402. According to an embodiment, when the camera module 400 is implemented as a folded camera, the camera module 400 may further include a reflective member. For example, the reflective member may include a prism. According to an embodiment, the reflective member may change a path of light incident from the lens assembly 403 one or more times.

According to an embodiment, the first driving circuitry 410 may include driving circuitry configured to move the lens assembly 403 in a second axial direction (e.g., the X-axis of FIG. 12A) so that the camera module 400 performs an auto focus (AF) function. According to an embodiment, the second driving circuitry 420 may include driving circuitry configured to move the reflective member in at least one axial direction (e.g., the X-axis, Y-axis, or Z-axis of FIG. 12A) or rotate the reflective member about at least one axial direction as a rotation axis so that the camera module 400 performs an optical image stabilization (OIS) function.

According to an embodiment, the control circuit 440 may apply a driving voltage to the first driving circuitry 410 using a linear scheme or a PWM scheme so that the camera module 400 performs an auto focus (AF) function. According to an embodiment, based on the first magnet 412 (e.g., the first magnet 1222a of FIG. 12A) moving in a second axial direction (e.g., the X-axis of FIG. 12A), the lens assembly 403 may move in the second axial direction (e.g., the X-axis of FIG. 12A).

According to an embodiment, the control circuit 440 may apply a driving voltage to the second driving circuitry 420 using a linear scheme or a PWM scheme so that the camera module 400 performs an OIS function. According to an embodiment, based on the second magnet 422 (e.g., the second magnet 1212, 1222b of FIG. 12A) moving, the reflective member (e.g., 1230 of FIG. 12A) may move in a first axial direction (e.g., the Z-axis of FIG. 12A), a second axial direction (e.g., the X-axis of FIG. 12A), or a third axial direction (e.g., the Y-axis of FIG. 12A). Alternatively, according to an embodiment, based on the second magnet 422 moving, the reflective member may rotate about a first axial direction (e.g., the Z-axis of FIG. 12A), a second axial direction (e.g., the X-axis of FIG. 12A), or a third axial direction (e.g., the Y-axis of FIG. 12A) as a rotation axis.

For example, the control circuit 440 may apply a driving voltage to driving circuitry in a first axial direction (e.g., the Z-axis of FIG. 12A) using a linear scheme or a PWM scheme. For example, based on electromagnetic force generated through electromagnetic interaction between a first-axis magnet (e.g., 1212 of FIG. 12A) and a first-axis coil (e.g., 1211 of FIG. 12A), the first-axis magnet may be moved in a first axial direction. For example, based on the first-axis magnet moving in the first axial direction, the reflective member may move in the first axial direction or rotate about the first axial direction as a rotation axis.

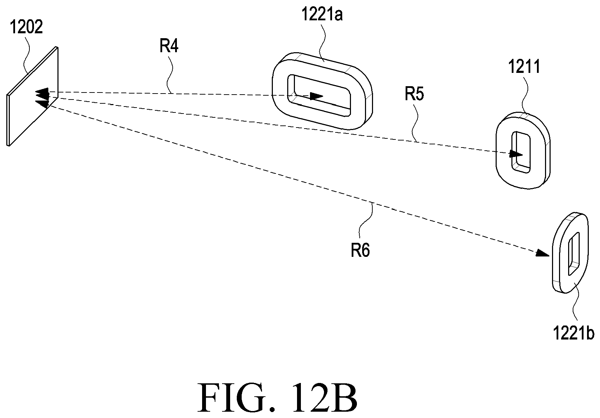

For example, the control circuit 440 may apply a driving voltage to driving circuitry in a third axial direction (e.g., the Y-axis of FIG. 12A) using a linear scheme or a PWM scheme. For example, based on electromagnetic force generated through electromagnetic interaction between a third-axis magnet (e.g., 1222b of FIG. 12) and a third-axis coil (e.g., 1221b of FIG. 12), the third-axis magnet may move in a third axial direction. For example, based on the third-axis magnet moving in the third axial direction, the reflective member may move in the third axial direction.

According to an embodiment, when the camera module 400 is implemented as a folded camera supporting continuous optical zoom, the lens assembly 403 may be implemented as a plurality of lens assemblies. According to an embodiment, the lens assembly 403 may include a first lens assembly, a second lens assembly, and a third lens assembly. However, this is an example, and the number of lens assemblies 403 may not be limited thereto. According to an embodiment, the camera module 400 may support continuous optical zoom for executing a zoom function for adjusting a zoom magnification by moving the third lens assembly.

According to an embodiment, the control circuit 440 may apply a driving voltage to the first driving circuitry 410 using a linear scheme or a PWM scheme to move the first lens assembly in a first axial direction so that the camera module 400 performs an auto focus (AF) function.

According to an embodiment, the control circuit 440 may apply a driving voltage to the second driving circuitry 420 using a linear scheme or a PWM scheme to move the reflective member in a second axial direction perpendicular to the first axial direction and/or a third axial direction perpendicular to the second axial direction so that the camera module 400 performs an optical image stabilization (OIS) function. The reflective member may change a path of light received from the second lens assembly one or more times.

According to an embodiment, the plurality of driving circuitries may further include third driving circuitry 430. According to an embodiment, the third driving circuitry 430 may include a third coil 431 and a third magnet 432. According to an embodiment, the third driving circuitry 430 may include driving circuitry moving the third lens assembly in at least one axial direction.

According to an embodiment, the control circuit 440 may apply a driving voltage to the third driving circuitry 430 using a linear scheme or a PWM scheme to move the third lens assembly in at least one axial direction so that the camera module 400 performs a zoom function for adjusting a zoom magnification. According to an embodiment, when the control circuit 440 applies a driving voltage to the third driving circuitry 430, the third magnet 432 may be moved in at least one axial direction, and the third coil 431 may be disposed at a fixed position. According to an embodiment, based on the third magnet 432 moving, the third lens assembly may move in at least one axial direction.

Hereinafter, an operation in which a driving scheme of the first driving circuitry 410, a driving scheme of the second driving circuitry 420, and a driving scheme of the third driving circuitry 430 are preset is described.

According to an embodiment, the control circuit 440 may turn on power of the camera module 400.

According to an embodiment, the linear scheme may not generate noise of the image sensor 402 disposed in the vicinity of the driving circuitry; however, current consumed by the driving circuitry may be greater than that in the PWM scheme. According to an embodiment, in the PWM scheme, current consumed by the driving circuitry may be smaller than that in the linear scheme; however, noise of the image sensor 402 disposed in the vicinity of the driving circuitry may be generated.

According to an embodiment, the control circuit 440 may compare a value related to the maximum current value flowing in a coil and the distance between the image sensor 402 and the coil with a specified value related to noise of the image sensor 402.

According to an embodiment, the control circuit 440 may identify a first value representing a value obtained by dividing a first maximum current value flowing in the first coil 411 by a square of a first distance between the first coil 411 and the image sensor 402. According to an embodiment, the first maximum current value may represent a value obtained by dividing a value obtained by multiplying a driving voltage applied to the first driving circuitry 410 and the number of turns of the first coil 411 by a first resistance value of the first coil 411. For example, the first distance may represent a minimum distance between a center of the first coil 411 and the image sensor 402. For example, the first distance may also represent a maximum distance between the center of the first coil 411 and the image sensor 402. However, this is an example, and the first distance may be measured in various ways.

According to an embodiment, when the first value is greater than a specified value, the control circuit 440 may set a driving scheme of the first driving circuitry 410 as a linear scheme. According to an embodiment, when the first value is no greater than the specified value, the control circuit 440 may set the driving scheme of the first driving circuitry 410 as a PWM scheme.

According to an embodiment, the specified value may represent a value where it is determined that noise of the image sensor 402 is not generated because an influence of a magnetic field generated by electromagnetic force of the coil and the magnet does not reach the image sensor 402 when the driving circuitry is driven in a PWM scheme. For example, the specified value may represent 500 mA/mm². For example, the specified value may represent 441 mA/mm². However, this is an example, and the specified value may include various numerical values. The specified value may be set by a user or may be automatically set by the control circuit 440.

According to an embodiment, when it is identified that the first value is no greater than the specified value, the control circuit 440 may set the driving scheme of the first driving circuitry 410 as a PWM scheme having a relatively smaller consumption current value among the PWM scheme and the linear scheme. According to an embodiment, when it is identified that the first value is greater than the specified value, the control circuit 440 may set the driving scheme of the first driving circuitry 410 as a linear scheme having relatively less influence of the magnetic field among the PWM scheme and the linear scheme.

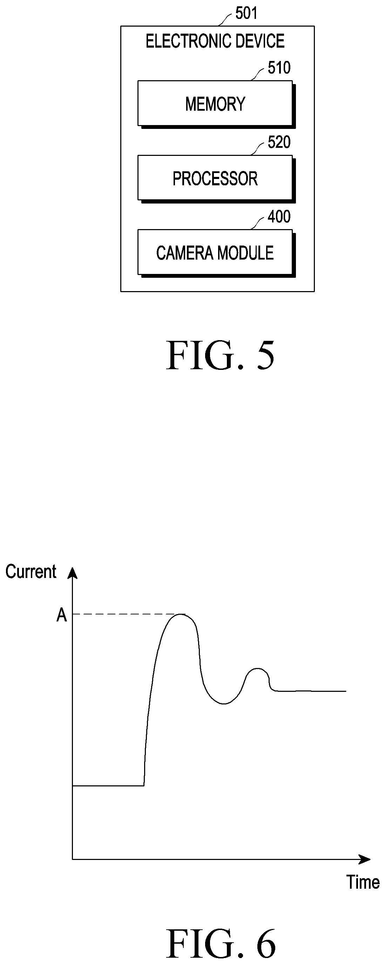

According to an embodiment, the driving scheme of the first driving circuitry 410 may be stored in memory 510 (e.g., the memory 510 of FIG. 5) or the camera module 400 (e.g., the memory 250 of FIG. 2) in correspondence with the first driving circuitry 410.

According to an embodiment, the control circuit 440 may identify a second value corresponding to a value obtained by dividing a second maximum current value flowing in the second coil 421 by a square of a second distance between the second coil 421 and the image sensor 402. According to an embodiment, the second maximum current value may represent a value obtained by dividing a value obtained by multiplying a driving voltage applied to the second driving circuitry 420 and the number of turns of the second coil 421 by a second resistance value of the second coil 421. For example, the second distance may represent a minimum distance between a center of the second coil 421 and the image sensor 402. For example, the second distance may also represent a maximum distance between the center of the second coil 421 and the image sensor 402. However, this is an example, and the second distance may be measured in various ways.

According to an embodiment, when the second value is greater than a specified value, the control circuit 440 may set a driving scheme of the second driving circuitry 420 as a linear scheme. According to an embodiment, when the second value is no greater than the specified value, the control circuit 440 may set the driving scheme of the second driving circuitry 420 as a PWM scheme. According to an embodiment, the driving scheme of the second driving circuitry 420 may be stored in the memory 510 or the camera module 400 in correspondence with the second driving circuitry 420.

According to an embodiment, the control circuit 440 may identify a third value corresponding to a value obtained by dividing a third maximum current value flowing in the third coil 431 by a square of a third distance between the third coil 431 and the image sensor 402. According to an embodiment, the third maximum current value may represent a value obtained by dividing a value obtained by multiplying a driving voltage applied to the third driving circuitry 430 and the number of turns of the third coil 431 by a third resistance value of the third coil 431. For example, the third distance may represent a minimum distance between a center of the third coil 431 and the image sensor 402. For example, the third distance may also represent a maximum distance between a central portion of the third coil 431 and the image sensor 402. However, this is an example, and the third distance may be measured in various ways.

According to an embodiment, when the third value is greater than a specified value, the control circuit 440 may set a driving scheme of the third driving circuitry 430 as a linear scheme. According to an embodiment, when the third value is no greater than the specified value, the control circuit 440 may set the driving scheme of the third driving circuitry 430 as a PWM scheme. According to an embodiment, the driving scheme of the third driving circuitry 430 may be stored in the memory 510 or the camera module 400 in correspondence with the third driving circuitry 430.

According to an implementation, according to an embodiment, driving schemes of driving circuitries may be set by a designer as either a PWM driving scheme or a linear driving scheme in a product design phase of the camera module 400 or the electronic device 501. According to an embodiment, each driving scheme of the set driving circuitries may be stored in the memory 510 or the camera module 400 in correspondence with each of the driving circuitries.

According to an embodiment, the driving schemes of the driving circuitries may all be set as a PWM scheme in a product design phase of the camera module 400 or the electronic device 501. For example, when a value related to noise between each of the driving circuitries and the image sensor 402 is relatively small, the driving schemes of the driving circuitries may be set as a PWM scheme by a designer or the control circuit 440.

According to an embodiment, when the value related to noise between each of the driving circuitries and the image sensor 402 is no greater than a specified value (e.g., 500 mA/mm²), it may be set as a case where the value related to noise is relatively small.

According to an embodiment, the driving schemes of the driving circuitries may all be set as a linear driving scheme in a product design phase of the camera module 400 or the electronic device 501. For example, when a value related to noise between each of the driving circuitries and the image sensor 402 is relatively large, the driving schemes of the driving circuitries may be set as a linear driving scheme by a designer or the control circuit 440.

According to an embodiment, when the value related to noise between each of the driving circuitries and the image sensor 402 is greater than a specified value (e.g., 500 mA/mm²), it may be set as a case where the value related to noise is relatively large.

Hereinafter, an operation in which the control circuit 440 reads driving schemes of the driving circuitries stored in the memory 510 or the camera module 400 and drives the driving circuitries is described.

According to an embodiment, the control circuit 440 may identify a driving scheme of the first driving circuitry 410 stored in the memory 510 or the camera module 400. According to an embodiment, the control circuit 440 may apply a driving voltage to the first driving circuitry 410 according to the identified driving scheme of the first driving circuitry 410.

According to an embodiment, the control circuit 440 may identify a driving scheme of the second driving circuitry 420 stored in the memory 510 or the camera module 400. According to an embodiment, the control circuit 440 may apply a driving voltage to the second driving circuitry 420 according to the identified driving scheme of the second driving circuitry 420.

According to an embodiment, the control circuit 440 may identify a driving scheme of the third driving circuitry 430 stored in the memory 510 or the camera module 400. According to an embodiment, the control circuit 440 may apply a driving voltage to the third driving circuitry 430 according to the identified driving scheme of the third driving circuitry 430.

FIG. 5 is a block diagram schematically illustrating an electronic device according to an embodiment.

Referring to FIG. 5, according to an embodiment, an electronic device 501 (e.g., the electronic device 101 of FIG. 1) may include memory 510 (e.g., the memory 130 of FIG. 1), a processor 520 (e.g., the processor 120 of FIG. 1, the control circuit 440 of FIG. 4), and a camera module 400 (e.g., the camera module 180 of FIG. 1, the camera module 180 of FIG. 2, the camera module 400 of FIG. 4).

According to an embodiment, the camera module 400 may be implemented identically or similarly to the camera module 400 of FIG. 4. According to an embodiment, the description of the camera module 400 of FIG. 4 may be equally applied to the camera module 400 included in the electronic device 501.

According to an embodiment, the control circuit 440 (e.g., the control circuit 440 of FIG. 4) may be implemented as the processor 520. According to an embodiment, operations performed by the control circuit 440 may be performed by the processor 520. According to an embodiment, the processor 520 may perform overall operations of the electronic device 501.

According to an embodiment, the memory 510 may store instructions capable of performing operations of the electronic device 501.

According to an embodiment, the processor 520 may turn on power of the camera module 400.

According to an embodiment, the processor 520 may identify (determine) a first driving scheme of the first driving circuitry 410 (e.g., the first driving circuitry 410 of FIG. 4) among a PWM scheme and a linear scheme. For example, the processor 520 may read a first driving scheme of the first driving circuitry 410 stored in the memory 510 or the camera module 400 and identify the first driving scheme. According to an embodiment, the processor 520 may apply a driving voltage to the first driving circuitry 410 based on the driving scheme of the first driving circuitry 410.

According to an embodiment, the processor 520 may identify (determine) a second driving scheme of the second driving circuitry 420 (e.g., the second driving circuitry 420 of FIG. 4) among a PWM scheme and a linear scheme. For example, the processor 520 may read a second driving scheme of the second driving circuitry 420 stored in the memory 510 or the camera module 400 and identify the second driving scheme. According to an embodiment, the processor 520 may apply a driving voltage to the second driving circuitry 420 based on the driving scheme of the second driving circuitry 420.

According to an embodiment, the processor 520 may identify (determine) a third driving scheme of the third driving circuitry 430 (e.g., the third driving circuitry 430 of FIG. 4) among a PWM scheme and a linear scheme. For example, the processor 520 may read a third driving scheme of the third driving circuitry 430 stored in the memory 510 or the camera module 400 and identify the third driving scheme. According to an embodiment, the processor 520 may apply a driving voltage to the third driving circuitry 430 based on the driving scheme of the third driving circuitry 430.

The operations of the electronic device 501 described in the drawings may be performed by the processor 520. However, for convenience of description, operations performed by the processor 520 are described as being performed by the electronic device 501.

The operations of the electronic device 501 described in the drawings may be performed by the camera module 400 (e.g., the control circuit 440). However, for convenience of description, operations performed by the processor 520 are described as being performed by the camera module 400 (e.g., the control circuit 440) or the electronic device 501.

FIG. 6 is a graph for describing a maximum value of current flowing in a coil according to an embodiment.

Referring to FIG. 6, a vertical axis of the graph may represent a current value flowing in a coil (e.g., the first coil 411, the second coil 421, or the third coil 431 of FIG. 4) included in driving circuitry (e.g., the first driving circuitry 410, the second driving circuitry 420, or the third driving circuitry 430 of FIG. 4). A horizontal axis of the graph may represent the time when the current value is measured.

According to an embodiment, an electronic device 501 may turn on power of a camera module 400 (e.g., the camera module 400 of FIG. 5).

According to an embodiment, the electronic device 501 (e.g., the electronic device 501 of FIG. 5) may apply a voltage to driving circuitry using a determined driving scheme. According to an embodiment, based on the voltage being applied to the driving circuitry, current may flow in the coil.

According to an embodiment, the electronic device 501 may identify a maximum value A of current flowing in the coil. In this case, the maximum value A of current may represent a maximum value of current when the number of turns of the coil is one.

According to an embodiment, the electronic device 501 may identify the number of turns of the coil.

According to an embodiment, the electronic device 501 may identify a value obtained by multiplying the maximum value A of current flowing in the coil by the number of turns of the coil as the maximum current value.

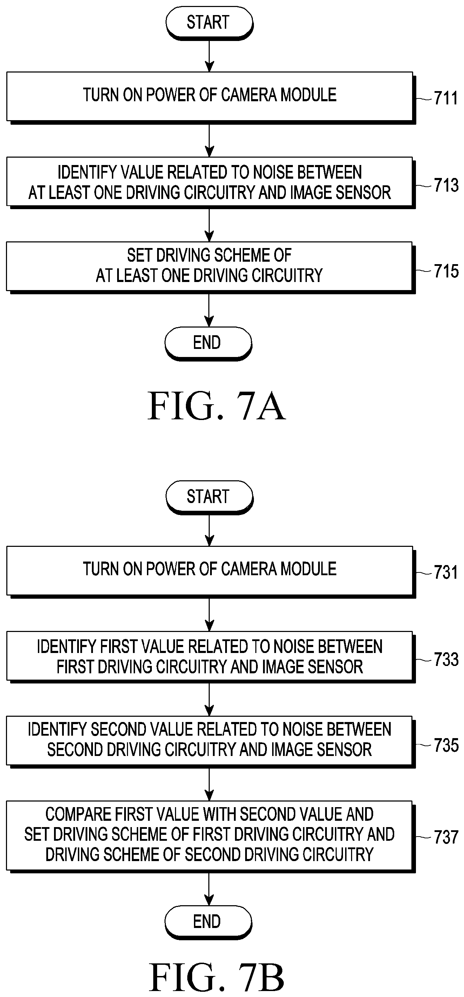

FIG. 7A is a flowchart illustrating an operation in which an electronic device determines a driving scheme of at least one driving circuitry according to an embodiment.

Referring to FIG. 7A, at least one driving scheme of at least one driving circuitry may be set in a product design phase of an electronic device 501 (e.g., the electronic device 501 of FIG. 5) or a camera module 400 (e.g., the camera module 400 of FIG. 5).

Hereinafter, an operation in which the electronic device 501 sets a driving scheme of at least one driving circuitry is described.

According to an embodiment, in operation 711, the electronic device 501 (e.g., the electronic device 501 of FIG. 5) may turn on power of a camera module 400 (e.g., the camera module 400 of FIG. 5).

According to an embodiment, in operation 713, the electronic device 501 may identify a value related to noise between at least one driving circuitry and an image sensor 402 (e.g., the image sensor 402 of FIG. 4). For example, the at least one driving circuitry may include first driving circuitry 410 (e.g., the first driving circuitry 410 of FIG. 4), second driving circuitry 420 (e.g., the second driving circuitry 420 of FIG. 4), or third driving circuitry 430 (e.g., the third driving circuitry 430 of FIG. 4). However, this is an example, and the at least one driving circuitry may not be limited thereto.

According to an embodiment, the value related to noise between the at least one driving circuitry and the image sensor 402 may represent a value obtained by dividing a maximum current value flowing in each coil of the at least one driving circuitry by a square of a distance between each coil and the image sensor 402.

For example, the value related to noise between the first driving circuitry 410 and the image sensor 402 may represent a value obtained by dividing a maximum current value flowing in a first coil 411 (e.g., the first coil 411 of FIG. 4) of the first driving circuitry 410 by a square of a distance between the first coil 411 and the image sensor 402.

For example, the value related to noise between the second driving circuitry 420 and the image sensor 402 may represent a value obtained by dividing a maximum current value flowing in a second coil 421 (e.g., the second coil 421 of FIG. 4) of the second driving circuitry 420 by a square of a distance between the second coil 421 and the image sensor 402.

For example, the value related to noise between the third driving circuitry 430 and the image sensor 402 may represent a value obtained by dividing a maximum current value flowing in a third coil 431 (e.g., the third coil 431 of FIG. 4) of the third driving circuitry 430 by a square of a distance between the third coil 431 and the image sensor 402.

According to an embodiment, in operation 715, the electronic device 501 may set a driving scheme of at least one driving circuitry.

According to an embodiment, based on the value related to noise between the at least one driving circuitry and the image sensor 402 being greater than a specified value, the driving scheme of the at least one driving circuitry may be set as a linear driving scheme.

According to an embodiment, based on the value related to noise between the at least one driving circuitry and the image sensor 402 being no greater than the specified value, the driving scheme of the at least one driving circuitry may be set as a PWM scheme.

According to an embodiment, the specified value may include a value related to noise of the image sensor 402. According to an embodiment, the specified value may represent a value where it is determined that noise of the image sensor 402 is not generated because an influence of a magnetic field generated by electromagnetic force of a coil and a magnet does not reach the image sensor 402 when driving circuitry is driven in a PWM scheme. For example, the specified value may represent 500 mA/mm². For example, the specified value may represent 441 mA/mm². However, this is an example, and the specified value may include various numerical values. The specified value may be set by a user or may be automatically set by the electronic device 501.

According to an embodiment, when it is identified that the value related to noise between the at least one driving circuitry and the image sensor 402 is no greater than the specified value, the electronic device 501 may determine that an influence of a magnetic field generated by electromagnetic force of each coil and each magnet 412 of the at least one driving circuitry does not reach the image sensor 402 and noise is not generated by the image sensor 402 when the at least one driving circuitry is driven in a PWM scheme. According to an embodiment, when it is identified that the value related to noise between the at least one driving circuitry and the image sensor 402 is greater than the specified value, the electronic device 501 may identify that an influence of a magnetic field reaches the image sensor 402 and noise is generated by the image sensor 402 when the at least one driving circuitry is driven in a PWM scheme.

According to an embodiment, the electronic device 501 may store the set driving scheme in the at least one driving circuitry in memory 510 (e.g., the memory 510 of FIG. 5) or the camera module 400 in association with each of the at least one driving circuitry.

According to an embodiment, based on identifying that the value related to noise between the at least one driving circuitry and the image sensor 402 is no greater than the specified value, the electronic device 501 may determine that a magnetic field due to electromagnetic force of each coil and each magnet of the at least one driving circuitry will not affect the image sensor 402 even when the at least one driving circuitry is driven in a PWM scheme. Accordingly, according to an embodiment, current consumed by driving circuitry driven in a PWM scheme among the at least one driving circuitry may be relatively smaller than current consumed by driving circuitry driven in a linear scheme among the at least one driving circuitry.

According to an embodiment, based on identifying that the value related to noise between the at least one driving circuitry and the image sensor 402 is greater than the specified value, the electronic device 501 may determine that, when the at least one driving circuitry is driven in a PWM scheme, noise of the image sensor 402 is generated based on a magnetic field due to electromagnetic force of each coil and each magnet of the at least one driving circuitry. According to an embodiment, based on identifying that the value related to noise between the at least one driving circuitry and the image sensor 402 is greater than the specified value, the electronic device 501 may determine to drive the at least one driving circuitry in a linear scheme. Accordingly, according to an embodiment, noise of the image sensor 402 may not be generated.

According to an embodiment, although described as the electronic device 501 performing operations, the operations may be performed by the camera module 400 (e.g., the control circuit 440).

FIG. 7B is a flowchart illustrating an operation in which an electronic device sets a driving scheme of at least one driving circuitry according to an embodiment.

Referring to FIG. 7B, at least one driving scheme of at least one driving circuitry may be set in a product design phase of an electronic device 501 (e.g., the electronic device 501 of FIG. 5) or a camera module 400 (e.g., the camera module 400 of FIG. 5).

Hereinafter, an operation in which an electronic device 501 (e.g., the electronic device 501 of FIG. 5) sets a driving scheme of at least one driving circuitry is described.

According to an embodiment, in operation 731, the electronic device 501 may turn on power of the camera module 400.

According to an embodiment, in operation 733, the electronic device 501 may identify a first value related to noise between first driving circuitry 410 (e.g., the first driving circuitry 410 of FIG. 4) and an image sensor 402 (e.g., the image sensor 402 of FIG. 4). For example, the first value may represent a value obtained by dividing a maximum current value flowing in a first coil 411 (e.g., the first coil 411 of FIG. 4) by a square of a distance between the first coil 411 and the image sensor 402. For example, the maximum current value flowing in the first coil 411 may be determined based on a resistance value of the first coil 411, a voltage applied to the first driving circuitry 410, and the number of turns of the first coil 411.

According to an embodiment, in operation 735, the electronic device 501 may identify a second value related to noise between second driving circuitry 420 (e.g., the second driving circuitry 420 of FIG. 4) and the image sensor 402. For example, the second value may represent a value obtained by dividing a maximum current value flowing in a second coil 421 (e.g., the second coil 421 of FIG. 4) by a square of a distance between the second coil 421 and the image sensor 402. For example, the maximum current value flowing in the second coil 421 may be determined based on a resistance value of the second coil 421, a voltage applied to the second driving circuitry 420, and the number of turns of the second coil 421.

According to an embodiment, in operation 737, the electronic device 501 may compare the first value with the second value and set a driving scheme of the first driving circuitry 410 and a driving scheme of the second driving circuitry 420.

According to an embodiment, when it is identified that the first value is less than the second value, the electronic device 501 may set the driving scheme of the first driving circuitry 410 as a PWM scheme and set the driving scheme of the second driving circuitry 420 as a linear scheme.

According to an embodiment, the electronic device 501 may store the set driving scheme of the first driving circuitry 410 and the set driving scheme of the second driving circuitry 420 in memory 510 (e.g., the memory 510 of FIG. 5) or the camera module 400 in association with the first driving circuitry 410 and the second driving circuitry 420, respectively.

According to an embodiment, although described as the electronic device 501 performing operations, the operations may be performed by the camera module 400 (e.g., the control circuit 440).

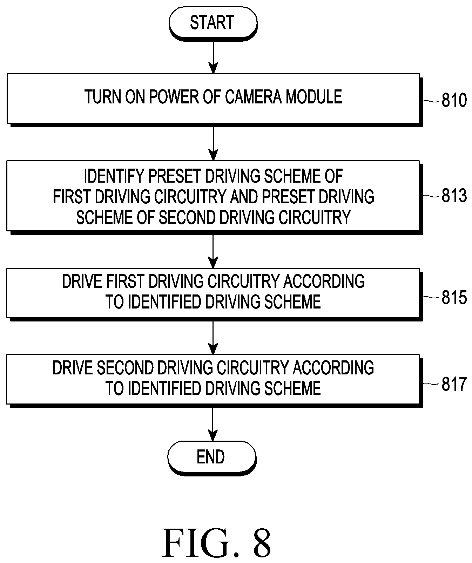

FIG. 8 is a flowchart illustrating an operation in which an electronic device drives at least one driving circuitry according to a preset driving scheme according to an embodiment.

Referring to FIG. 8, according to an embodiment, in operation 810, an electronic device 501 (e.g., the electronic device 501 of FIG. 5) may turn on power of a camera module 400 (e.g., the camera module 400 of FIG. 5).

According to an embodiment, in operation 813, the electronic device 501 may identify (or determine) a preset driving scheme of first driving circuitry 410 (e.g., the first driving circuitry 410 of FIG. 5) and a preset driving scheme of second driving circuitry 420 (e.g., the second driving circuitry 420 of FIG. 5).

According to an embodiment, the driving scheme of the first driving circuitry 410 may be stored in memory 510 (e.g., the memory 510 of FIG. 5) or the camera module 400 (e.g., the memory 250 of FIG. 2). According to an embodiment, the driving scheme of the second driving circuitry 420 may be stored in the memory 510 or the camera module 400. For example, the electronic device 501 may read the stored preset driving schemes and identify the driving scheme of the first driving circuitry 410 and the driving scheme of the second driving circuitry 420.

According to an embodiment, in operation 815, the electronic device 501 may drive the first driving circuitry 410 according to the identified driving scheme. For example, the electronic device 501 may apply a driving voltage to the first driving circuitry 410 according to the identified driving scheme.

According to an embodiment, in operation 817, the electronic device 501 may drive the second driving circuitry 420 according to the identified driving scheme. For example, the electronic device 501 may apply a driving voltage to the second driving circuitry 420 according to the identified driving scheme.

According to an embodiment, although described as the electronic device 501 performing operations, the operations may be performed by the camera module 400.

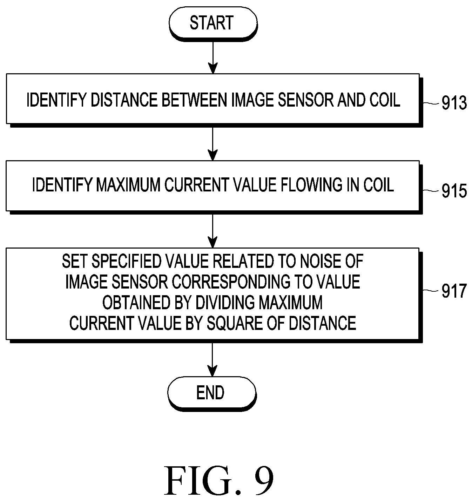

FIG. 9 is a flowchart illustrating an operation in which an electronic device determines a specified value related to noise of an image sensor according to an embodiment.

Referring to FIG. 9, according to an embodiment, in operation 913, an electronic device 501 (e.g., the electronic device 501 of FIG. 5) may identify a distance between an image sensor 402 (e.g., the image sensor 402 of FIG. 4) and a coil (e.g., the first coil 411, the second coil 421, or the third coil 431 of FIG. 4) included in driving circuitry (e.g., the first driving circuitry 410, the second driving circuitry 420, or the third driving circuitry 430 of FIG. 4).

According to an embodiment, in operation 915, the electronic device 501 may identify a maximum current value flowing in the coil. For example, the maximum current value may be determined based on a driving voltage applied to the driving circuitry, a resistance value of the coil, and the number of turns of the coil. For example, the maximum current value may represent a value obtained by multiplying a value obtained by dividing the voltage by the resistance value by the number of turns of the coil.

According to an embodiment, in operation 917, the electronic device 501 may set a specified value related to noise of the image sensor 402 corresponding to a value obtained by dividing the maximum current value by a square of the distance.

According to an embodiment, as the distance between the image sensor 402 and the coil is greater and as the maximum current value flowing in the coil is smaller, a degree to which an influence of a magnetic field generated by the magnet and the coil reaches the image sensor 402 may be smaller.

According to an embodiment, the electronic device 501 may set the specified value where it is determined that the influence of the magnetic field does not reach the image sensor 402 even when driving circuitry is driven in a PWM scheme. For example, the specified value may represent 441 mA/mm² or 500 mA/mm². However, this is an example, and the specified value may not be limited thereto.

According to an embodiment, when it is identified that a value obtained by dividing the maximum current value by a square of the distance is no greater than the specified value, the electronic device 501 may determine that noise is not generated by the image sensor 402 because an influence of a magnetic field does not reach the image sensor 402 even when the driving circuitry is driven in a PWM scheme. In this case, the electronic device 501 may determine the driving scheme of the driving circuitry as a PWM scheme.

According to an embodiment, when it is identified that a value obtained by dividing the maximum current value by a square of the distance is greater than the specified value, the electronic device 501 may identify that an influence of a magnetic field reaches the image sensor 402 and noise is generated by the image sensor 402 when the driving circuitry is driven in a PWM scheme. In this case, the electronic device 501 may determine the driving scheme of the driving circuitry as a linear scheme.

FIG. 10 is a view schematically illustrating a structure of a camera module according to an embodiment.

Referring to FIG. 10, according to an embodiment, a camera module 1000 (e.g., the camera module 400 of FIG. 4, the camera module 400 of FIG. 5) may include a lens assembly 1003 (e.g., the lens assembly 403 of FIG. 4), first driving circuitry 1012, 1011 (e.g., the first driving circuitry 410 of FIG. 4), and second driving circuitry 1021a, 1022a, 1022b, 1021b (e.g., the second driving circuitry 420 of FIG. 4).

According to an embodiment, the camera module 1000 may be implemented as a straight-type camera module in which light incident on the lens assembly 1003 is transmitted to an image sensor (not illustrated) (e.g., the image sensor 402 of FIG. 4) without being refracted.

According to an embodiment, the first driving circuitry 1011, 1012 may represent driving circuitry configured to move the lens assembly 1003 in a first axial direction (e.g., a Z-axis) so that the camera module 1000 performs an auto focus (AF) function. According to an embodiment, the first driving circuitry 1011, 1012 may include a first coil 1011 (e.g., the first coil 411 of FIG. 4) and a first magnet 1012 (e.g., the first magnet 412 of FIG. 4). According to an embodiment, as a driving voltage is applied to the first coil 1011, the first magnet 1012 may be moved in a first axial direction. In this case, the first coil 1011 may be disposed at a fixed position.

According to an embodiment, the second driving circuitry 1021a, 1022a, 1022b, 1021b may represent driving circuitry configured to move the lens assembly 1003 in a second axial direction (e.g., an X-axis) perpendicular to the first axial direction or a third axial direction (e.g., a Y-axis) perpendicular to the first axial direction and the second axial direction so that the camera module 1000 performs an optical image stabilization (OIS) function.

According to an embodiment, the second driving circuitry 1021a, 1022a, 1022b, 1021b may include a second coil 1021a, 1021b (e.g., the second coil 421 of FIG. 4) and a second magnet 1022a, 1022b (e.g., the second magnet 422 of FIG. 4). According to an embodiment, the second driving circuitry 1021a, 1022a, 1022b, 1021b may include second-axial-direction driving circuitry 1021a, 1022a configured to move the lens assembly 1003 in a second axial direction (e.g., an X-axis). According to an embodiment, the second driving circuitry 1021a, 1022a, 1022b, 1021b may include third-axial-direction driving circuitry 1022b, 1021b configured to move the lens assembly 1003 in a third axial direction (e.g., a Y-axis).

According to an embodiment, the second-axial-direction driving circuitry 1021a, 1022a may include a second-axis magnet 1022a and a second-axis coil 1021a. According to an embodiment, the third-axial-direction driving circuitry 1022b, 1021b may include a third-axis magnet 1022b and a third-axis coil 1021b.

According to an embodiment, as a driving voltage is applied to the second-axis coil 1021a, the second-axis magnet 1022a may be moved in a second axial direction (e.g., an X-axis). In this case, the second-axis coil 1021a may be disposed at a fixed position. According to an embodiment, as the second-axis magnet 1022a moves in a second axial direction (e.g., an X-axis), the lens assembly 1003 may move in the second axial direction (e.g., the X-axis).

According to an embodiment, as a driving voltage is applied to the third-axis coil 1021b, the third-axis magnet 1022b may be moved in a third axial direction (e.g., a Y-axis). In this case, the third-axis coil 1021b may be disposed at a fixed position. According to an embodiment, as the third-axis magnet 1022b moves in a third axial direction (e.g., a Y-axis), the lens assembly 1003 may move in the third axial direction (e.g., the Y-axis).

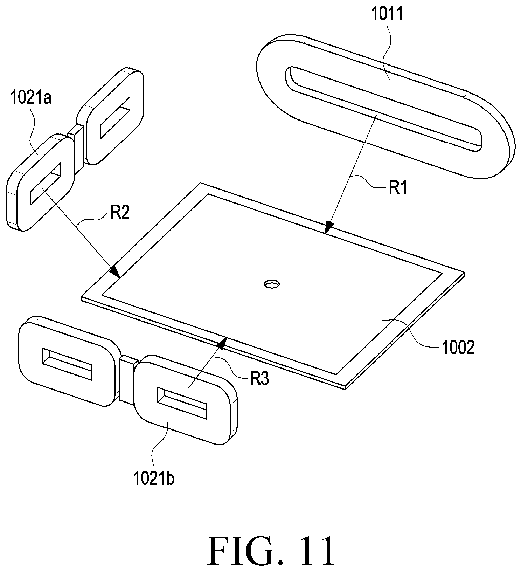

FIG. 11 is a view illustrating a distance between a camera module and an image sensor according to an embodiment.

Referring to FIG. 11, according to an embodiment, a camera module 1000 (e.g., the camera module 1000 of FIG. 10, the camera module 400 of FIG. 4) may be implemented as a straight-type camera module.

According to an embodiment, an electronic device 501 (e.g., the electronic device 501 of FIG. 5) may identify a distance R1 between an image sensor 1002 (e.g., the image sensor 402 of FIG. 4) and a first coil 1011 (e.g., the first coil 411 of FIG. 4). For example, the distance R1 may represent a minimum distance between a center of the first coil 1011 and the image sensor 1002.

According to an embodiment, the electronic device 501 may identify a maximum current value flowing in the first coil 1011. For example, the maximum current value flowing in the first coil 1011 may be determined based on a driving voltage applied to the first coil 1011, a resistance of the first coil 1011, and the number of turns of the first coil 1011.

According to an embodiment, when it is identified that a value obtained by dividing the maximum current value flowing in the first coil 1011 by a square of the distance R1 is greater than a specified value, the electronic device 501 may identify a driving scheme of the first driving circuitry 410 (e.g., the first driving circuitry 410 of FIG. 4) as a linear scheme. According to an embodiment, when it is identified that a value obtained by dividing the maximum current value flowing in the first coil 1011 by a square of the distance R1 is no greater than the specified value, the electronic device 501 may identify the driving scheme of the first driving circuitry 410 as a PWM scheme.

According to an embodiment, the electronic device 501 may identify a distance R2 between the image sensor 1002 and a second-axis coil 1021a (e.g., the second coil 421 of FIG. 4, the second-axis coil 1021a of FIG. 10). For example, the distance R2 may represent a minimum distance between a center of the second-axis coil 1021a and the image sensor 1002.

According to an embodiment, when the second-axis coil 1021a includes a coil composed of a plurality of loops, a minimum value among minimum distances between a center of each of the loops and the image sensor 1002 may be identified as the distance R2. According to an embodiment, when the second-axis coil 1021a includes a coil composed of a plurality of loops, an average value of minimum distances between a center of each of the loops and the image sensor 1002 may also be identified as the distance R2.

According to an embodiment, the electronic device 501 may identify a maximum current value flowing in the second-axis coil 1021a. For example, the maximum current value flowing in the second-axis coil 1021a may be determined based on a driving voltage applied to the second-axis coil 1021a, a resistance of the second-axis coil 1021a, and the number of turns of the second-axis coil 1021a.

According to an embodiment, when it is identified that a value obtained by dividing the maximum current value flowing in the second-axis coil 1021a by a square of the distance R2 is greater than a specified value, the electronic device 501 may identify a driving scheme of the second-axial-direction driving circuitry 1021a, 1022a as a linear scheme. According to an embodiment, when it is identified that a value obtained by dividing the maximum current value flowing in the second-axis coil 1021a by a square of the distance R2 is no greater than the specified value, the electronic device 501 may identify the driving scheme of the second-axial-direction driving circuitry 1021a, 1022a as a PWM scheme.

According to an embodiment, the electronic device 501 may identify a distance R3 between the image sensor 1002 and a third-axis coil 1021b (e.g., the second coil 421 of FIG. 4, the third-axis coil 1021b of FIG. 10). For example, the distance R2 may represent a minimum distance between a center of the third-axis coil 1021b and the image sensor 1002.

According to an embodiment, when the third-axis coil 1021b includes a coil composed of a plurality of loops, an average value of minimum distances between a center of each of the loops and the image sensor 1002 may be identified as the distance R3. When the third-axis coil 1021b includes a plurality of loops, a minimum value among minimum distances between a center of each of the loops and the image sensor 1002 may also be identified as the distance R3.

According to an embodiment, the electronic device 501 may identify a maximum current value flowing in the third-axis coil 1021b. For example, the maximum current value flowing in the third-axis coil 1021b may be determined based on a driving voltage applied to the third-axis coil 1021b, a resistance of the third-axis coil 1021b, and the number of turns of the third-axis coil 1021b.

According to an embodiment, when it is identified that a value obtained by dividing the maximum current value flowing in the third-axis coil 1021b by a square of the distance R3 is greater than a specified value, the electronic device 501 may identify a driving scheme of the third-axial-direction driving circuitry 1022b, 1021b as a linear scheme. According to an embodiment, when it is identified that a value obtained by dividing the maximum current value flowing in the third-axis coil 1021b by a square of the distance R3 is no greater than the specified value, the electronic device 501 may identify the driving scheme of the third-axial-direction driving circuitry 1022b, 1021b as a PWM scheme.

FIG. 12A is a view schematically illustrating a structure of a camera module according to an embodiment.

Referring to FIG. 12A, according to an embodiment, a camera module 1200 (e.g., the camera module 400 of FIG. 4) may include a lens assembly 1203 (e.g., the lens assembly 403 of FIG. 4), a reflective member 1230, an image sensor 1202 (e.g., the image sensor 402 of FIG. 4), first driving circuitry 1221a, 1222a (e.g., the first driving circuitry 410 of FIG. 4), and second driving circuitry 1211, 1212, 1221b, 1222b (e.g., the second driving circuitry 420 of FIG. 4). According to an embodiment, the camera module 400 may be implemented as a folded camera in which light reflected or refracted through the reflective member 1230 is transmitted to the image sensor 1202.

According to an embodiment, the first driving circuitry 1221a, 1222a and/or the second driving circuitry 1211, 1212, 1221b, 1222b may be received (or disposed) in a carrier (or housing) of the camera module 1200. For example, the reflective member 1230 may be disposed between the lens assembly 1203 and the carrier. However, this is an example, and a disposition structure of the reflective member 1230 may not be limited thereto.

According to an embodiment, a shield can 1210 may be coupled to a housing of the camera module 1200 to protect internal components of the camera module 1200.

According to an embodiment, the first driving circuitry 1221a, 1222a may include a first magnet 1222a (e.g., the first magnet 412 of FIG. 4) and a first coil 1221a (e.g., the first coil 411 of FIG. 4). According to an embodiment, the second driving circuitry 1211, 1212, 1221b, 1222b may include a second coil 1211, 1221b (e.g., the second coil 421 of FIG. 4) and a second magnet 1212, 1222b (e.g., the second magnet 422 of FIG. 4). For example, the second coil 1211, 1221b may include a first-axis coil 1211 and a third-axis coil 1221b. For example, the second magnet 1212, 1222b may include a first-axis magnet 1212 and a third-axis magnet 1222b.

According to an embodiment, the first coil 1221a and the second coil 1211, 1221b may be disposed on a flexible printed circuits board (FPCB).

According to an embodiment, a driving voltage may be applied to the first coil 1221a. For example, a driving voltage may be applied to the first coil 1221a by a linear scheme or a PWM scheme.

According to an embodiment, based on electromagnetic force due to electromagnetic interaction with the first coil 1221a, the first magnet 1222a may move in a second axial direction (e.g., an X-axis). According to an embodiment, based on the first magnet 1222a moving in the second axial direction, the lens assembly 1203 may move. Accordingly, the camera module 1200 may perform an AF function.

According to an embodiment, a driving voltage may be applied to the second coil 1211, 1221b. For example, a driving voltage may be applied to the second coil 1211, 1221b by a linear scheme or a PWM scheme.

According to an embodiment, based on electromagnetic force due to electromagnetic interaction with a first-axis coil 1211 disposed in a direction facing the first-axis magnet 1212, the first-axis magnet 1212 may move in a first axial direction (e.g., a Z-axis). According to an embodiment, based on the first-axis magnet 1212 moving in a first axial direction (e.g., a Z-axis), the reflective member 1230 may move in the first axial direction (e.g., the Z-axis). Alternatively, according to an embodiment, based on the first-axis magnet 1221b moving in a first axial direction (e.g., a Z-axis), the reflective member 1230 may rotate about the first axial direction (e.g., the Z-axis). In other words, the reflective member 1230 may rotate about the first axial direction (e.g., the Z-axis) as a rotation axis. Accordingly, the camera module 1200 may perform an OIS function for compensating for a position in response to vibration (movement) of the camera module 1200 in a third axial direction (e.g., a Y-axis).

According to an embodiment, based on electromagnetic force due to electromagnetic interaction with a third-axis coil 1221b disposed in a direction facing the third-axis magnet 1222b, the third-axis magnet 1222b may move in a third axial direction (e.g., a Y-axis). According to an embodiment, based on the third-axis magnet 1222b moving in a third axial direction (e.g., a Y-axis), the reflective member 1230 may move or rotate in the third axial direction (e.g., the Y-axis). Alternatively, according to an embodiment, based on the third-axis magnet 1222b moving in a third axial direction (e.g., a Y-axis), the reflective member 1230 may rotate about the third axial direction (e.g., the Y-axis). In other words, the reflective member 1230 may rotate about the third axial direction (e.g., the Y-axis) as a rotation axis. Accordingly, the camera module 1200 may perform an OIS function for compensating for a position in response to vibration (movement) of the camera module 1200 in a second axial direction (e.g., an X-axis).

FIG. 12B is a view illustrating a distance between a camera module and an image sensor according to an embodiment.

Referring to FIG. 12B, a camera module 1200 (e.g., the camera module 1200 of FIG. 12, the camera module 400 of FIG. 4) may be implemented as a folded camera module.

According to an embodiment, an electronic device 501 (e.g., the electronic device 501 of FIG. 5) may identify a distance R4 between an image sensor 1202 (e.g., the image sensor 402 of FIG. 4) and a first coil 1221a (e.g., the first coil 411 of FIG. 4, the first coil 1221a of FIG. 12). For example, the distance R4 may represent a minimum distance between a center of the first coil 1221a and the image sensor 1202.

According to an embodiment, the electronic device 501 may identify a maximum current value flowing in the first coil 1221a. For example, the maximum current value flowing in the first coil 1221a may be determined based on a driving voltage applied to the first coil 1221a, a resistance of the first coil 1221a, and the number of turns of the first coil 1221a.

According to an embodiment, when it is identified that a value obtained by dividing the maximum current value flowing in the first coil 1221a by a square of the distance R4 is greater than a specified value, the electronic device 501 may set a driving scheme of the first driving circuitry 410 (e.g., the first driving circuitry 410 of FIG. 4) as a linear scheme. According to an embodiment, when it is identified that a value obtained by dividing the maximum current value flowing in the first coil 1221a by a square of the distance R4 is no greater than the specified value, the electronic device 501 may set the driving scheme of the first driving circuitry 410 as a PWM scheme. According to an embodiment, when it is identified that a value obtained by dividing the maximum current value flowing in the first coil 1221a by a square of the distance R4 is greater than the specified value, the electronic device 501 may set the driving scheme of the first driving circuitry 410 as a linear scheme.

According to an embodiment, the electronic device 501 may identify a distance R5 between the image sensor 1202 and a first-axis coil 1211 (e.g., the first-axis coil 1211 of FIG. 12). For example, the distance R5 may represent a minimum distance between a center of the first-axis coil 1211 and the image sensor 1202.

According to an embodiment, the electronic device 501 may identify a maximum current value flowing in the first-axis coil 1211. For example, the maximum current value flowing in the first-axis coil 1211 may be determined based on a driving voltage applied to the first-axis coil 1211, a resistance of the first-axis coil 1211, and the number of turns of the first-axis coil 1211.

According to an embodiment, when it is identified that a value obtained by dividing the maximum current value flowing in the first-axis coil 1211 by a square of the distance R5 is greater than a specified value, the electronic device 501 may set a driving scheme of the second driving circuitry 420 as a linear scheme. According to an embodiment, when it is identified that a value obtained by dividing the maximum current value flowing in the first-axis coil 1211 by a square of the distance R5 is no greater than the specified value, the electronic device 501 may set the driving scheme of the second driving circuitry 420 as a PWM scheme.

According to an embodiment, the electronic device 501 may identify a distance R6 between the image sensor 1202 and a third-axis coil 1221b (e.g., the third-axis coil 1221b of FIG. 12). For example, the distance R6 may represent a minimum distance between a center of the third-axis coil 1221b and the image sensor 1202.

According to an embodiment, the electronic device 501 may identify a maximum current value flowing in the third-axis coil 1221b. For example, the maximum current value flowing in the third-axis coil 1221b may be determined based on a driving voltage applied to the third-axis coil 1221b, a resistance of the third-axis coil 1221b, and the number of turns of the third-axis coil 1221b.

According to an embodiment, when it is identified that a value obtained by dividing the maximum current value flowing in the third-axis coil 1221b by a square of the distance R6 is greater than a specified value, the electronic device 501 may set a driving scheme of the third driving circuitry 430 as a linear scheme. According to an embodiment, when it is identified that a value obtained by dividing the maximum current value flowing in the third-axis coil 1221b by a square of the distance R6 is no greater than the specified value, the electronic device 501 may set the driving scheme of the third driving circuitry 430 as a PWM scheme.

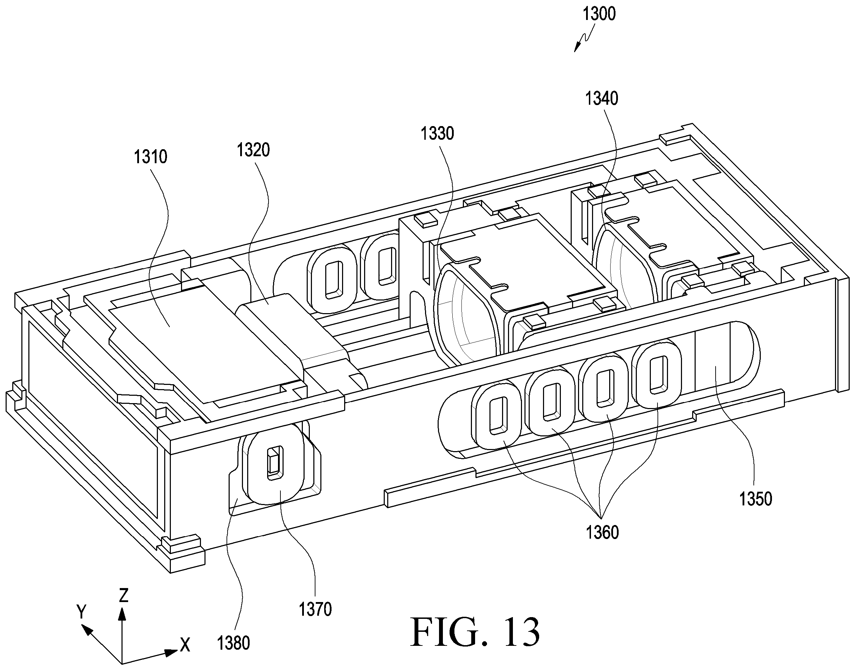

FIG. 13 is a view schematically illustrating a structure of a camera module according to an embodiment.

Referring to FIG. 13, according to an embodiment, a camera module 1300 (e.g., the camera module 400 of FIG. 4) may be implemented as a folded camera module supporting continuous optical zoom.

According to an embodiment, the camera module 1300 may include an image sensor 1310 (e.g., the image sensor 402 of FIG. 4), a first lens assembly 1320 (e.g., the lens assembly 403 of FIG. 4), a second lens assembly 1340 (e.g., the lens assembly 403 of FIG. 4), and a third lens assembly 1330 (e.g., the lens assembly 403 of FIG. 4).

According to an embodiment, the third lens assembly 1330 may be moved in at least one axial direction (e.g., a second axial direction (e.g., an X-axis)) to execute a zoom function for adjusting a zoom magnification. For example, based on electromagnetic force between at least one coil 1360 and at least one magnet 1350, the third lens assembly 1330 may be moved in at least one axial direction (e.g., a second axial direction (e.g., an X-axis)).

According to an embodiment, the first lens assembly 1320 may be moved in at least one axial direction so that the camera module 1300 performs an OIS function. According to an implementation, the camera module 1300 may further include a reflective member, and the reflective member may move or rotate in at least one axial direction so that the camera module 1300 performs an OIS function.

According to an embodiment, the second lens assembly 1340 may be moved in at least one axial direction so that the camera module 1300 performs an AF function.

A structure of the camera module 1300 may not be limited to the structure illustrated in FIG. 13. The number of lens assemblies, the number of magnets, and the number of coils may not be limited to configurations illustrated in FIG. 13.

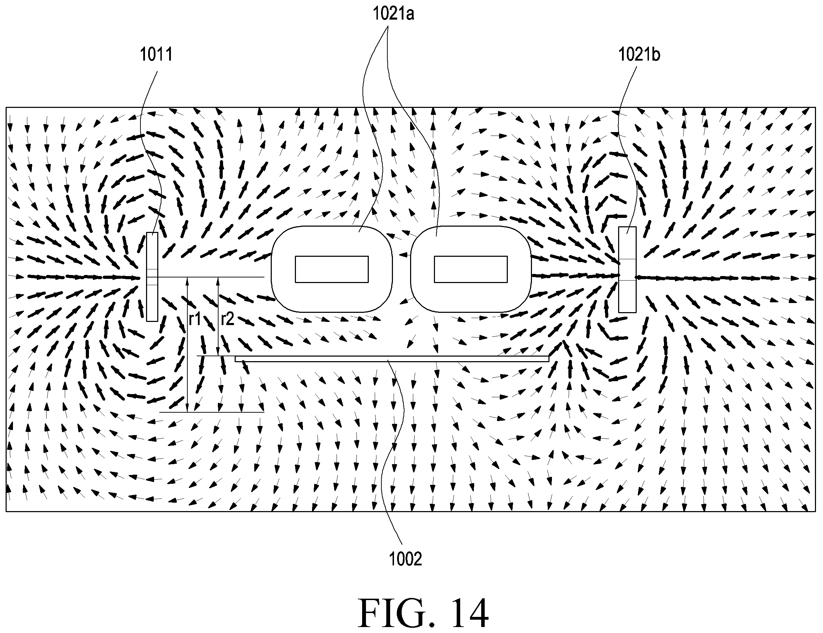

FIG. 14 is a view illustrating magnetic flux for describing a relationship between a magnetic field generated by a coil and noise of an image sensor based on a distance between the coil included in driving circuitry and the image sensor according to an embodiment.

Referring to FIG. 14, according to an embodiment, a camera module 1000 (e.g., the camera module 400 of FIG. 4, the camera module 1000 of FIG. 10) may be implemented as a straight-type camera module.

According to an embodiment, a distance where a magnetic field generated by a first coil 1011 (e.g., the first coil 411 of FIG. 4, the first coil 1011 of FIG. 10) affects an image sensor 1002 (e.g., the image sensor 402 of FIG. 4, the image sensor 1002 of FIG. 10) may represent r1.

According to an embodiment, a distance where a magnetic field generated by a second coil 1021a, 1021b (e.g., the second coil 421 of FIG. 4, the second coil 1021a, 1021b of FIG. 10) affects the image sensor 1002 may represent r1.

According to an embodiment, a distance between a center of the first coil 1011 and the image sensor 1002 may represent r2, which is smaller than r1. According to an embodiment, a distance between a center of the second coil 1021a, 1021b and the image sensor 1002 may represent r2, which is smaller than r1.

According to an embodiment, an electronic device 501 (e.g., the electronic device 501 of FIG. 5) may determine that the image sensor 402 is affected by a magnetic field generated by the first coil 1011 and will generate noise when the first driving circuitry 410 (e.g., the first driving circuitry 410 of FIG. 4) is driven in a PWM scheme.

According to an embodiment, the electronic device 501 may determine that the image sensor 402 is affected by a magnetic field generated by the second coil 1021a, 1021b and will generate noise when the second driving circuitry 420 (e.g., the second driving circuitry 420 of FIG. 4) is driven in a PWM scheme.

According to an embodiment, the electronic device 501 may determine driving schemes of the first driving circuitry 410 and the second driving circuitry 420 as a linear scheme.

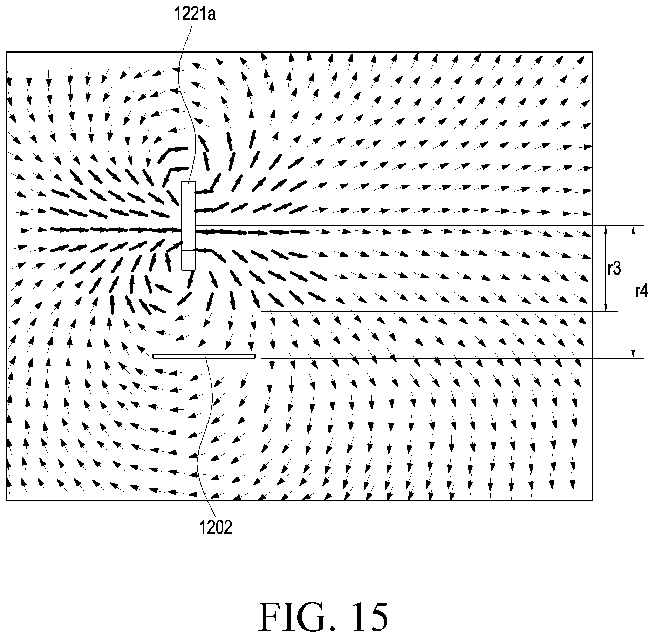

FIG. 15 is a view illustrating magnetic flux for describing a relationship between a magnetic field generated by a coil and noise of an image sensor based on a distance between the coil included in driving circuitry and the image sensor according to an embodiment.

Referring to FIG. 15, according to an embodiment, a camera module 1000 (e.g., the camera module 400 of FIG. 4, the camera module 1200 of FIG. 12) may be implemented as a folded camera module.

According to an embodiment, a distance where a magnetic field generated by a first coil 1221a (e.g., the first coil 411 of FIG. 4, the first coil 1221a of FIG. 12) affects an image sensor 1202 (e.g., the image sensor 402 of FIG. 4, the image sensor 1202 of FIG. 12) may represent r3.

According to an embodiment, a distance between a center of the first coil 1221a and the image sensor 1202 may represent r4, which is greater than r3.

According to an embodiment, an electronic device 501 (e.g., the electronic device 501 of FIG. 5) may determine that the image sensor 402 will not be affected by a magnetic field generated by the first coil 1221a when the first driving circuitry 410 (e.g., the first driving circuitry 410 of FIG. 4) is driven in a PWM scheme.

According to an embodiment, the electronic device 501 may determine a driving scheme of the first driving circuitry 410 as a PWM scheme.

Although not illustrated in FIG. 15, according to an embodiment, since a distance between a second coil 1211, 1221b (e.g., the second coil 1211, 1221b of FIG. 12) and the image sensor 402 is greater than r4, a driving scheme of the second driving circuitry 420 (e.g., the second driving circuitry 420 of FIG. 4) may be determined as a PWM scheme.

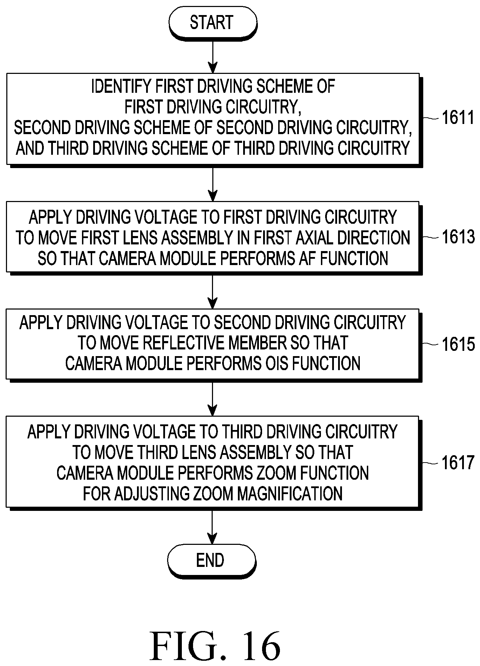

FIG. 16 is a flowchart illustrating an operation in which an electronic device determines a driving scheme of first driving circuitry, a driving scheme of second driving circuitry, and a driving scheme of third driving circuitry according to an embodiment.

Referring to FIG. 16, according to an embodiment, a camera module 400 (e.g., the camera module 400 of FIG. 4) may be implemented as a folded camera in which light reflected or refracted through a reflective member is transmitted to an image sensor 402 (e.g., the image sensor 402 of FIG. 4). According to an embodiment, a lens assembly 403 (e.g., the lens assembly 403 of FIG. 4) may include a first lens assembly, a second lens assembly, and a third lens assembly. According to an embodiment, the camera module 400 may support continuous optical zoom for executing a zoom function for adjusting a zoom magnification by moving the third lens assembly.

According to an embodiment, in operation 1611, an electronic device 501 (e.g., the electronic device 501 of FIG. 5) may identify (or determine) a first driving scheme of first driving circuitry 410 (e.g., the first driving circuitry 410 of FIG. 4), a second driving scheme of second driving circuitry 420 (e.g., the second driving circuitry 420 of FIG. 4), and a third driving scheme of third driving circuitry (e.g., the third driving circuitry 430 of FIG. 4).

For example, the electronic device 501 may read a preset first driving scheme stored in memory 510 (e.g., the memory 510 of FIG. 5) in correspondence with the first driving circuitry 410. For example, the electronic device 501 may read a preset second driving scheme stored in the memory 510 in correspondence with the second driving circuitry 420. For example, the electronic device 501 may read a preset third driving scheme stored in the memory 510 in correspondence with the third driving circuitry 430.

According to an embodiment, when a first value corresponding to a value obtained by dividing a first maximum current value flowing in a first coil 411 (e.g., the first coil 411 of FIG. 4) by a square of a first distance between the first coil 411 and an image sensor 402 (e.g., the image sensor 402 of FIG. 4) is greater than a specified value, the first driving scheme may be preset as a linear scheme. For example, when the first value is no greater than the specified value, the first driving scheme may be preset as a PWM scheme. According to an embodiment, the first maximum current value may represent a value obtained by dividing a value obtained by multiplying a voltage applied to the first driving circuitry 410 and the number of turns of the first coil 411 by a first resistance value of the first coil 411. For example, the first distance may represent a minimum distance between a center of the first coil 411 and the image sensor 402.

According to an embodiment, when a second value corresponding to a value obtained by dividing a second maximum current value flowing in a second coil 421 (e.g., the second coil 421 of FIG. 4) by a square of a second distance between the second coil 421 and the image sensor 402 is greater than a specified value, the second driving scheme may be preset as a linear scheme. For example, when the second value is no greater than the specified value, the second driving scheme may be preset as a PWM scheme. According to an embodiment, the second maximum current value may represent a value obtained by dividing a value obtained by multiplying a voltage applied to the second driving circuitry 420 and the number of turns of the second coil 421 by a second resistance value of the second coil 421. For example, the second distance may represent a minimum distance between a center of the second coil 421 and the image sensor 402.

According to an embodiment, when a third value corresponding to a value obtained by dividing a third maximum current value flowing in a third coil 431 (e.g., the third coil 431 of FIG. 4) by a square of a third distance between the third coil 431 and the image sensor 402 is greater than a specified value, the third driving scheme may be preset as a linear scheme. For example, when the third value is no greater than the specified value, the third driving scheme may be preset as a PWM scheme. According to an embodiment, the third maximum current value may represent a value obtained by dividing a value obtained by multiplying a voltage applied to the third driving circuitry 430 and the number of turns of the third coil 431 by a third resistance value of the third coil 431. For example, the third distance may represent a minimum distance between a center of the third coil 431 and the image sensor 402.

According to an embodiment, in operation 1613, the electronic device 501 may apply a driving voltage to the first driving circuitry 410 using the determined driving scheme to move the first lens assembly in a first axial direction so that the camera module 400 performs an AF function. For example, the first axial direction may include an optical-axis direction.

According to an embodiment, in operation 1615, the electronic device 501 may apply a driving voltage to the second driving circuitry 420 using the determined driving scheme to move the reflective member so that the camera module 400 performs an OIS function. For example, the second axial direction may include a direction perpendicular to the optical axis. For example, the reflective member may change a path of light received from the second lens assembly one or more times.

According to an embodiment, in operation 1617, the electronic device 501 may apply a driving voltage to the third driving circuitry 430 using the determined driving scheme to move the third lens assembly so that the camera module 400 performs a zoom function for adjusting a zoom magnification. For example, the third lens assembly may move in a first axial direction.

According to an embodiment, although described as the electronic device 501 performing operations, the operations may be performed by the camera module 400.

According to an embodiment, in a method of operating a camera module, the camera module may include an image sensor, a first lens assembly, and first driving circuitry including a first coil and a first magnet, and the first driving circuitry may be configured to move the first lens assembly in at least one axial direction.

According to an embodiment, the method of operating the camera module may include an operation of applying a driving voltage to the first driving circuitry according to a linear driving scheme based on a first value related to noise of the image sensor based on a first maximum current value flowing in the first coil and a first distance between the first coil and the image sensor being greater than a specified value.

According to an embodiment, the method of operating the camera module may include an operation of applying the driving voltage to the first driving circuitry according to a pulse width modulation (PWM) scheme based on the first value being no greater than the specified value.

According to an embodiment, in the method of operating the camera module, the first maximum current value may be determined based on a first resistance value of the first coil, the driving voltage applied to the first driving circuitry, and the number of turns of the first coil.

According to an embodiment, in the method of operating the camera module, the first value may represent a value obtained by dividing the first maximum current value by a square of the first distance.

According to an embodiment, in the method of operating the camera module, the specified value may represent 500 mA/mm².

According to an embodiment, in the method of operating the camera module, the first distance between the first coil and the image sensor may include a minimum distance between a center position of the first coil and the image sensor.

According to an embodiment, in the method of operating the camera module, the first magnet may be configured to move as the driving voltage is applied to the first driving circuitry, and the first coil may be disposed at a fixed position.

According to an embodiment, in the method of operating the camera module, the camera module may further include second driving circuitry including a second coil and a second magnet, and the method may include an operation of applying the driving voltage to the second driving circuitry according to a linear driving scheme based on a second value based on a second maximum current value flowing in the second coil and a second distance between the second coil and the image sensor being greater than the specified value and an operation of applying the driving voltage to the second driving circuitry according to a pulse width modulation (PWM) scheme based on the second value being no greater than the specified value.

According to an embodiment, the method of operating the camera module may include an operation of applying the driving voltage to the first driving circuitry to move the first lens assembly in a first axial direction among at least one axial direction to perform an auto focus (AF) function and an operation of applying the driving voltage to the second driving circuitry to move the first lens assembly in a second axial direction perpendicular to the first axial direction among the at least one axial direction or a third axial direction perpendicular to the first axial direction and the second axial direction to perform an optical image stabilization (OIS) function.

According to an embodiment, in the method of operating the camera module, the camera module may include a reflective member disposed between a carrier receiving the second driving circuitry and the first lens assembly and configured to change a path of light received through the first lens assembly one or more times.

According to an embodiment, the method of operating the camera module may include an operation of applying the driving voltage to the second driving circuitry to move the reflective member in the at least one axial direction to perform an optical image stabilization (OIS) function.

According to an embodiment, in the method of operating the camera module, the camera module may further include a second lens assembly and third driving circuitry including a third coil and a third magnet, and the method may include an operation of applying the driving voltage to the third driving circuitry to move the second lens assembly to perform a zoom function for adjusting a zoom magnification.

According to an embodiment, a camera module may include an image sensor, a first lens assembly, a control circuit, and at least one driving circuitry, and the at least one driving circuitry may be configured to move the first lens assembly in at least one axial direction.

According to an embodiment, in the camera module, the control circuit may apply a driving voltage to the at least one driving circuitry according to a pulse width modulation (PWM) scheme.

According to an embodiment, in the camera module, a value related to noise of the image sensor based on a maximum current value flowing in each coil included in the at least one driving circuitry and a distance between each coil and the image sensor may be equal to or less than a specified value.

According to an embodiment, in the camera module, the maximum current value flowing in each coil may be determined based on a resistance value of each coil, a voltage applied to the at least one driving circuitry, and the number of turns of each coil.

According to an embodiment, in the camera module, the value based on the maximum current value flowing in each coil and the distance between each coil and the image sensor may represent a value obtained by dividing the maximum current value flowing in each coil by a square of the distance between each coil and the image sensor.

According to an embodiment, in the camera module, the specified value may represent 500 mA/mm².

According to an embodiment, in the camera module, the distance between each coil and the image sensor may include a minimum distance between a center position of each coil and the image sensor.

According to an embodiment, in the camera module, each magnet included in the at least one driving circuitry may be configured to move as the driving voltage is applied to the at least one driving circuitry, and each coil may be disposed at a fixed position.

According to an embodiment, a camera module may include an image sensor, a first lens assembly, a control circuit, and a plurality of driving circuitries including first driving circuitry including a first magnet and a first coil and second driving circuitry including a second magnet and a second coil, and at least a portion of the plurality of driving circuitries may be configured to move the first lens assembly in at least one axial direction.

According to an embodiment, in the camera module, the control circuit may apply a driving voltage to the first driving circuitry according to a pulse width modulation (PWM) scheme and apply the driving voltage to the second driving circuitry according to a linear scheme.

According to an embodiment, in the camera module, a first value related to noise of the image sensor based on a first maximum current value flowing in the first coil and a first distance between the first coil and the image sensor may be less than a second value related to noise of the image sensor based on a second maximum current value flowing in the second coil and a second distance between the second coil and the image sensor.

According to an embodiment, in the camera module, the first maximum current value may be determined based on a first resistance value of the first coil, a voltage applied to the first driving circuitry, and the number of turns of the first coil, and the second maximum current value may be determined based on a second resistance value of the second coil, a voltage applied to the second driving circuitry, and the number of turns of the second coil.

According to an embodiment, in the camera module, the first value may represent a value obtained by dividing the first maximum current value by a square of the first distance, and the second value may represent a value obtained by dividing the second maximum current value by a square of the second distance.

According to an embodiment, in the camera module, the specified value may represent 500 mA/mm².

According to an embodiment, the camera module may further include a reflective member disposed between a carrier receiving the second driving circuitry and the first lens assembly and configured to change a path of light received through the first lens assembly one or more times.

According to an embodiment, in the camera module, the control circuit may be configured to apply the driving voltage to the second driving circuitry to move the reflective member in the at least one axial direction to perform an optical image stabilization (OIS) function.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to the above-listed embodiments.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 or 501). For example, a processor (e.g., the processor 120 or 520) of the machine (e.g., the electronic device 101 or 501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method of operating a camera module,
wherein the camera module comprises an image sensor, a first lens assembly, and first driving circuitry including a first coil and a first magnet, and wherein the first driving circuitry is configured to move the first lens assembly in at least one axial direction, the method of operating the camera module comprising:
based on a first value related to noise of the image sensor based on a first maximum current value flowing in the first coil and a first distance between the first coil and the image sensor being greater than a specified value, applying a driving voltage to the first driving circuitry according to a linear driving scheme; and
based on the first value being no greater than the specified value, applying the driving voltage to the first driving circuitry according to a pulse width modulation (PWM) scheme.

2. The method of operating the camera module of claim 1, wherein the first maximum current value is determined based on a first resistance value of the first coil, the driving voltage applied to the first driving circuitry, and the number of turns of the first coil.

3. The method of operating the camera module of any one of claims 1 to 2, wherein the first value represents a value obtained by dividing the first maximum current value by a square of the first distance.

4. The method of operating the camera module of any one of claims 1 to 3, wherein the specified value represents 500mA/mm².

5. The method of operating the camera module of any one of claims 1 to 4, wherein the first distance between the first coil and the image sensor includes a minimum distance between the image sensor and a center position of the first coil.

6. The method of operating the camera module of any one of claims 1 to 5, wherein the first magnet is configured to move as the driving voltage is applied to the first driving circuitry, and wherein the first coil is disposed at a fixed position.

7. The method of operating the camera module of any one of claims 1 to 6, further comprising second driving circuitry (420) including a second coil (421) and a second magnet (422),
wherein the method of operating the camera module further comprises:
based on a second value based on a second maximum current value flowing in the second coil and a second distance between the second coil and the image sensor being greater than the specified value, applying the driving voltage to the second driving circuitry according to the linear driving scheme; and
based on the second value being no greater than the specified value, applying the driving voltage to the second driving circuitry according to the pulse width modulation (PWM) scheme.

8. The method of operating the camera module of any one of claims 1 to 7, further comprising:
applying the driving voltage to the first driving circuitry to move the first lens assembly in a first axial direction among at least one axial direction to perform an auto focus (AF) function; and
applying the driving voltage to the second driving circuitry to move the first lens assembly in a second axial direction perpendicular to the first axial direction among the at least one axial direction or in a third axial direction perpendicular to the first axial direction and the second axial direction to perform an optical image stabilization (OIS) function.

9. The method of operating the camera module of any one of claims 1 to 8, wherein the camera module further comprises:
second driving circuitry (420) including a second coil (421) and a second magnet (422); and
a reflective member disposed between a carrier, which accommodates the second driving circuitry, and the first lens assembly, and configured to change a path of light received via the first lens assembly one or more times, and
wherein the method of operating the camera module further comprises applying the driving voltage to the second driving circuitry to move the reflective member in the at least one axial direction to perform an optical image stabilization (OIS) function.

10. The method of operating the camera module of any one of claims 1 to 9, wherein the camera module further comprises:
a second lens assembly (403); and
third driving circuitry (430) including a third coil (431) and a third magnet (432), and
wherein the method of operating the camera module comprises applying the driving voltage to the third driving circuitry to move the second lens assembly to perform a zoom function for adjusting a zoom magnification.

11. A camera module (400) comprising:
an image sensor (402);
a first lens assembly;
a control circuit; and
at least one driving circuitry, wherein the at least one driving circuitry is configured to move the first lens assembly in at least one axial direction,
wherein the control circuit applies a driving voltage to the at least one driving circuitry according to a pulse width modulation (PWM) scheme, and
wherein a value related to noise of the image sensor based on a maximum current value flowing in each coil included in the at least one driving circuitry and a distance between each coil and the image sensor is equal to or less than a specified value.

12. The camera module of claim 11, wherein the maximum current value flowing in each coil is determined based on a resistance value of each coil, the driving voltage applied to the at least one driving circuitry, and the number of turns of each coil.

13. The camera module of any one of claims 11 to 12, wherein the value based on the maximum current value flowing in each coil and the distance between each coil and the image sensor represents a value obtained by dividing the maximum current value flowing in each coil by a square of the distance between each coil and the image sensor.

14. A camera module (400) comprising:
an image sensor (402);
a first lens assembly;
a control circuit; and
a plurality of driving circuitries including first driving circuitry including a first magnet and a first coil and second driving circuitry including a second magnet and a second coil, wherein at least a portion of the plurality of driving circuitries is configured to move the first lens assembly in at least one axial direction,
wherein the control circuit applies a driving voltage to the first driving circuitry according to a pulse width modulation (PWM) scheme and applies the driving voltage to the second driving circuitry according to a linear scheme, and
wherein a first value related to noise of the image sensor based on a first maximum current value flowing in the first coil and a first distance between the first coil and the image sensor is less than a second value related to noise of the image sensor based on a second maximum current value flowing in the second coil and a second distance between the second coil and the image sensor.

15. The camera module of claim 14, wherein the first maximum current value is determined based on a first resistance value of the first coil, a voltage applied to the first driving circuitry, and the number of turns of the first coil, and
wherein the second maximum current value is determined based on a second resistance value of the second coil, the driving voltage applied to the second driving circuitry, and the number of turns of the second coil.
